# EUROPÄISCHE PATENTSCHRIFT

(11) **EP 1 490 442 B1**
(45) Veröffentlichungstag und Bekanntmachung des Hinweises auf die Patenterteilung: **19.03.2008**
(21) Anmeldenummer: 03744809.9
(22) Anmeldetag: 18.03.2003
(51) Int. Cl.: C09B 67/22

(54) **FARBSTOFFMISCHUNGEN VON FASERREAKTIVEN AZOFARBSTOFFEN, DEREN HERSTELLUNG UND IHRE VERWENDUNG**
DYE MIXTURES OF FIBRE REACTIVE AZODYES, PRODUCTION AND USE THEREOF
MELANGES DE COLORANTS AZOIQUES REAGISSANT AVEC LES FIBRES, LEUR PRODUCTION ET LEUR UTILISATION

(30) Priorität: 22.03.2002 DE 10212772; 19.04.2002 DE 10217479
(43) Veröffentlichungstag der Anmeldung: 29.12.2004
(73) Patentinhaber: DyStar Textilfarben GmbH & Co. Deutschland KG, 65926 Frankfurt am Main (DE)
(72) Erfinder: EICHHORN, Joachim, 65929 Frankfurt am Main (DE)
(86) Internationale Anmeldenummer: PCT/EP2003/002793
(87) Internationale Veröffentlichungsnummer: WO 2003/080741

(56) Entgegenhaltungen:
- EP-A- 1 046 679
- EP-A- 1 134 260
- EP-A- 1 213 329
- WO-A-99/47608
- WO-A-02/098988
- DE-A- 10 127 061

## Beschreibung

Die Erfindung liegt auf dem technischen Gebiet der faserreaktiven Azofarbstoffe.

Farbstoffmischungen faserreaktiver Azofarbstoffe und deren Verwendung zum Färben von Hydroxy- und Carbonamidgruppen-haltigem Material in schwarzen Farbtönen sind beispielsweise aus den Dokumenten US 5,445,654, US 5,611,821, KR 94-2560, Sho 58-160362 und EP-A-0 870 807 bekannt. Diese besitzen jedoch gewisse anwendungstechnische Mängel, wie beispielsweise eine zu große Abhängigkeit der Farbausbeute von wechselnden Färbeparametem im Färbeprozeß, oder einen ungenügenden oder unegalen Farbaufbau auf Baumwolle (ein guter Farbaufbau ergibt sich aus der Fähigkeit eines Farbstoffes, bei Anwendung erhöhter Farbstoffkonzentrationen im Färbebad die entsprechend farbstärkere Färbung zu liefem), oder eine eine zu große Salzabhängigkeit der Färbungen. Folge dieser Mängel können schlechte Reproduzierbarkeiten der erhältlichen Färbungen sein. Aus den Dokumenten WO 98/42784, WO 98/42785, WO 93/18224 und US 5,330,539 sind Farbstoffe beziehungsweise Farbstoffmsichungen bekannt, die in Gegenwart geringer Salzmengen gefärbt werden können, jedoch in Abwesenheit von Salz nur sehr farbschwache Färbungen liefern.

Da es aus ökologischen und ökonomischen Gründen erforderlich ist die Salzfracht der Färbereiabwasser zu reduzieren, besteht ein Bedarf an Reaktivfarbstoffen, die in Gegenwart geringer Salzmengen oder sogar in Abwesenheit von Elektrolytsalzen, Färbungen mit hoher Farbstärke liefern.

Mit der vorliegenden Erfindung wurden nunmehr Farbstoffmischungen gefunden, die Färbungen mit hohen Farbstärken in Gegenwart von nur sehr geringen Mengen an, oder sogar in Abwesenheit von Elektrolytsalzen liefern.

Die Erfindung betrifft somit Farbstoffmischungen, die einen oder mehrere, wie zwei oder drei Farbstoffe der nachstehend angegebenen und definierten allgemeinen Formel (I), 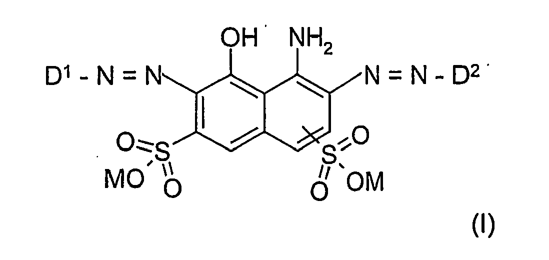 einen oder mehrere, wie zwei oder drei Farbstoffe der nachstehend angegebenen und definierten allgemeinen Formel (II), 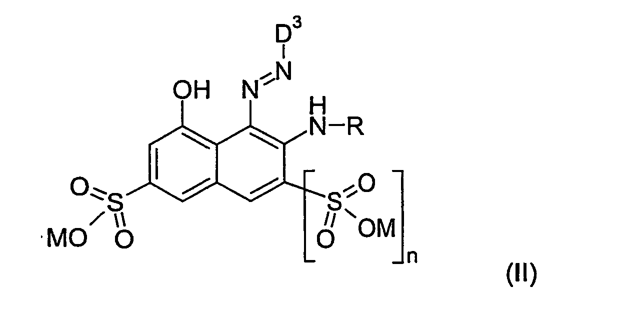 sowie optional einen oder mehrere, wie zwei oder drei Farbstoffe mit beispielsweise den nachstehend angegebenen und definierten allgemeinen Formeln (IIIa) - (IIIf) als weitere Misch- bzw. Nuancierkomponenten enthalten 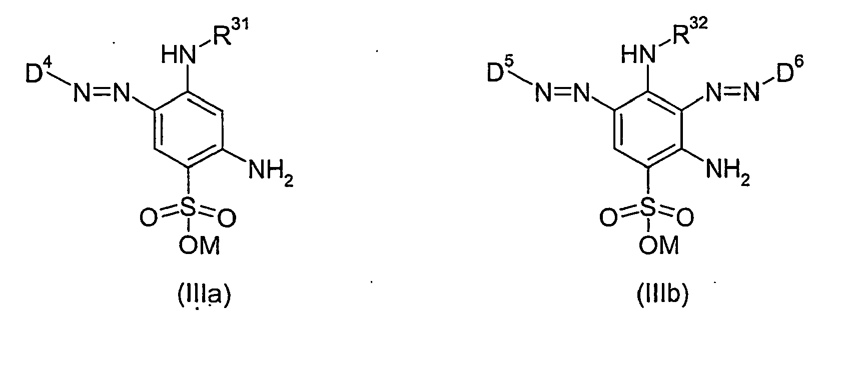 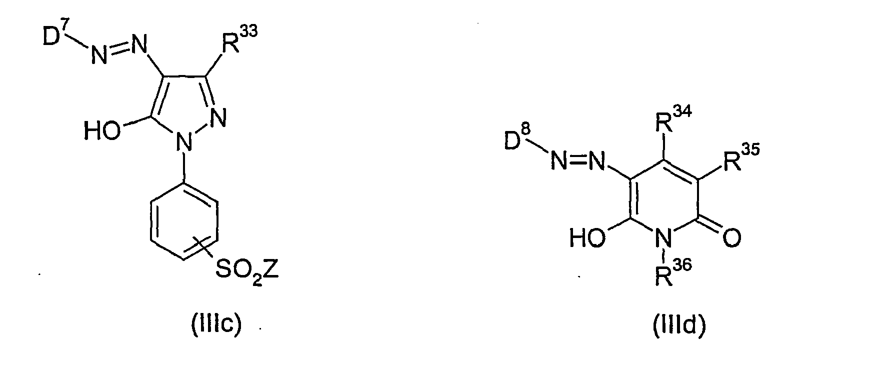 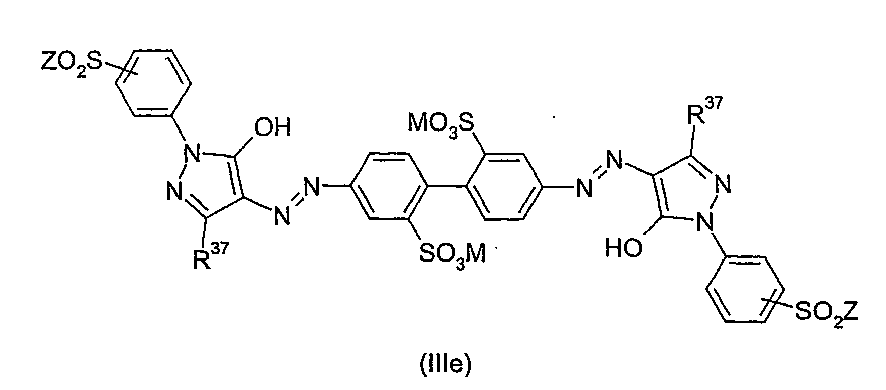 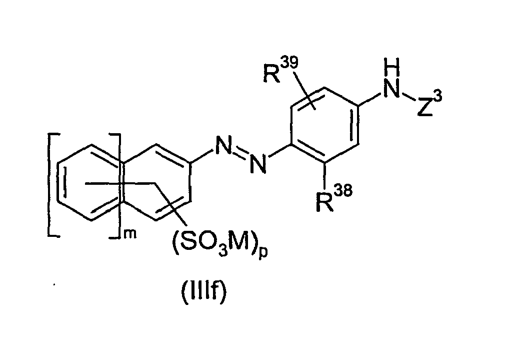 in welchen bedeuten:
D¹ und D² sind eine Gruppe der allgemeinen Formel (1) 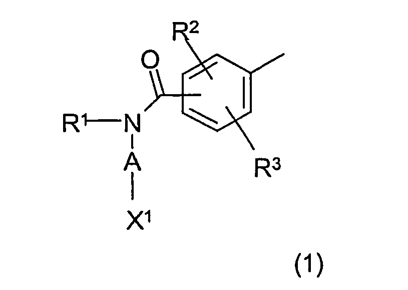
worin
- R¹: Wasserstoff, (C₁-C₄)-Alkyl, Aryl oder ein substituierter Arylrest ist;
- R² und R³: unabhängig voneinander Wasserstoff, (C₁-C₄)-Alkyl, (C₁-C₄)-Alkoxy, Hydroxy, Sulfo, Carboxy, Amido oder Halogen sind; und
- A: eine Phenylengruppe der allgemeinen Formel (2) ist 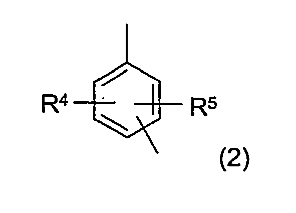 worin
R⁴ und R⁵ unabhängig voneinander Wasserstoff, (C₁-C₄)-Alkyl, (C₁-C₄)-Alkoxy, Hydroxy, Sulfo, Carboxy, Amido oder Halogen bedeuten; oder
eine Naphthylengruppe der allgemeinen Formel (3) 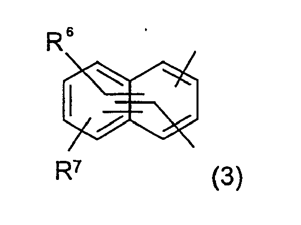 worin
R⁶ und R⁷ unabhängig voneinander Wasserstoff, (C₁-C₄)-Alkyl, (C₁-C₄)-Alkoxy, Hydroxy, Sulfo, Carboxy, Amido oder Halogen bedeuten; oder
eine Polymethylengruppe der allgemeinen Formel (4)

-(CR⁸R⁹)ₖ- (4)

worin
k eine ganze Zahl größer 1 ist und
R⁸ und R⁹ unabhängig voneinander Wasserstoff, (C₁-C₄)-Alkyl, (C₁-C₄)-Alkoxy, Hydroxy, Cyano, Amido, Halogen oder Aryl sind; und
- X¹: für Wasserstoff oder eine Gruppe der Formel -SO₂-Z steht; oder
für eine Phenylgruppe der allgemeinen Formel (5) stehen 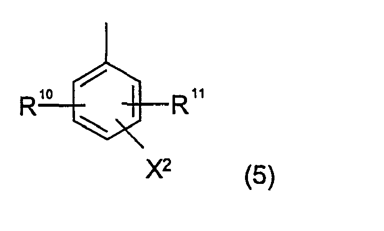 worin
- R¹⁰ und R¹¹: unabhängig voneinander Wasserstoff, (C₁-C₄)-Alkyl, (C₁-C₄)-Alkoxy, Hydroxy, Sulfo, Carboxy, Amido oder Halogen sind; und
- X²: eine der Bedeutungen von X¹ hat;
oder eine Naphthylgruppe der allgemeinen Formel (6) bedeuten 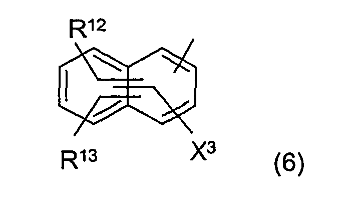 worin
- R¹² und R¹³: unabhängig voneinander Wasserstoff, (C₁-C₄)-Alkyl, (C₁-C₄)-Alkoxy, Hydroxy, Sulfo, Carboxy, Amido oder Halogen sind; und
- X³: eine der Bedeutungen von X¹ hat;
- Z: -CH=CH₂, -CH₂CH₂Z¹ oder Hydroxy bedeutet, worin
Z¹ Hydroxy oder eine unter Alkaliwirkung abspaltbare Gruppe ist; und
- M: Wasserstoff, ein Alkalimetall oder ein Äquivalent eines Erdalkalimetalls bedeutet;
- D³: besitzt eine der Bedeutungen von D¹ oder D² oder steht für eine Gruppe der allgemeinen Formel (7) 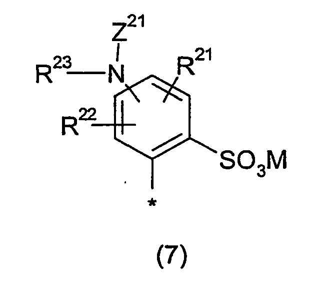 worin
R²¹ und R²² unabhängig voneinander eine der Bedeutungen von R² und R³ haben;
R²³ ist Wasserstoff, (C₁- C₄)-Alkyl, unsubstituiertes oder durch (C₁-C₄)-Alkyl, (C₁-C₄)-Alkoxy, Sulfo, Halogen oder Carboxy substituiertes Phenyl; und
Z²¹ ist eine faserreaktive Gruppe der allgemeinen Formel (8) oder (9) oder (10) 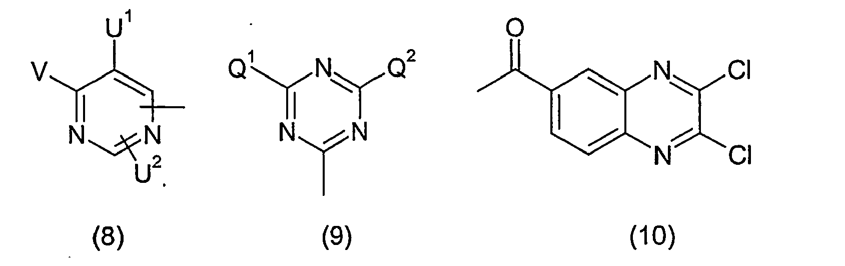 worin
V Fluor oder Chlor bedeutet;
U¹, U² unabhängig voneinander Fluor, Chlor oder Wasserstoff sind; und
Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (11) oder (12) bedeuten 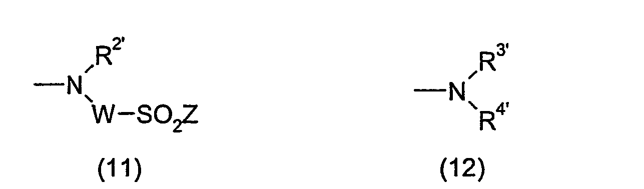 worin
R²' Wasserstoff oder (C₁-C₆)-Alkyl, Sulfo-(C₁-C₆)-Alkyl, oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
R³' und R⁴' unabhängig voneinander eine der Bedeutungen von R²' haben oder ein cyclisches Ringsystem der Formel -(CH₂)ⱼ- bilden, wobei j 4 oder 5 bedeutet, oder alternativ -(CH₂)₂-E-(CH₂)₂-, wobei E Sauerstoff, Schwefel, Sulfo, -NR⁵'- mit R⁵' = (C₁-C₆)-Alkyl ist, oder sie stehen für eine Gruppe der allgemeinen Formel (13) 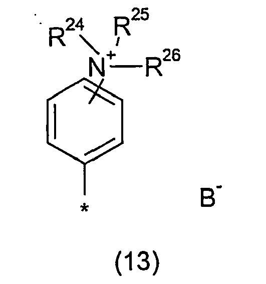 worin
R²⁴, R²⁵ und R²⁶ (C₁-C₄)-Alkyl oder (C₁-C₄)-Hydroxyalkyl sind; und
B- das Äquivalent eines Anions, wie Hydrogensulfat, Sulfat, Fluorid, Chlorid, Bromid, Dihydrogenphosphat, Hydrogenphosphat, Phosphat, Hydroxid oder Acetat ist;

W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfo, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist; und
Z die obengenannte Bedeutung hat;
- R: ist Wasserstoff, (C₁-C₄)-Alkyl oder Phenyl, das unsubstituiert oder durch (C₁-C₄)-Alkyl, (C₁-C₄)-Alkoxy, Sulfo, Halogen, Carboxy, Acetamido, Ureido substituiert ist; oder
steht für eine Gruppe der Formel (14)

CH₂ - SO₃M (14),

worin M die obengenannten Bedeutungen besitzt; und
- n: ist 1 oder 2,
- D⁴ D⁵, D⁶, D⁷, D⁸: eine der Bedeutungen von D¹, D² oder D³ besitzen, wobei, D⁴ wenn R³¹ nicht für eine Gruppe der allgemeinen Formel (8) oder (9) steht, sowie D⁵ oder D⁶ und D⁸ mindestens eine faserreaktive Gruppe der Formel -SO₂Z oder Z²¹ enthalten;
- R³¹: Wasserstoff, Acetyl, Carbamoyl, Sulfomethyl ist oder für eine Gruppe der allgemeinen Formel (8) oder (9) steht,
- R³²: Wasserstoff oder Sulfomethyl ist,
- R³³: Methyl, Carboxy oder Carboxyalkyl, mit C₁-C₄ -Alkyl, ist,
- R³⁴: Wasserstoff oder Methyl ist,
- R³⁵: Wasserstoff, Cyano, Carbamoyl, Carboxy oder Sulfomethyl ist,
- R³⁶: Methyl, Ethyl oder β-Sulfoethyl ist,
- R³⁷: Methyl, Carboxy oder Carboxyalkyl, mit C₁-C₄ -Alkyl, ist,
- R³⁸: Acetamido, Ureido oder Methyl ist,
- R³⁹: Wasserstoff, Methyl oder Methoxy ist,
- m: 0 oder 1 ist,
- p: 1, 2 oder 3 ist und
- Z³: eine der Bedeutungen von Z²¹ hat.

In der allgemeinen Formel (1) steht mindestens einer der Reste D¹ und D² für eine Gruppe der allgemeinen Formel (1);
wobei im Falle, daß A für eine Gruppe der allgemeinen Formel (4) steht, R¹ für Aryl oder substituiertes Aryl steht; und
der Reaktivfarbstoff der allgemeinen Formel (I) mindestens eine -SO₂-Z - Gruppe enthält.

Die Farbstoffe der allgemeinen Formel (II) enthalten unabhängig voneinander mindestens eine faserreaktive Gruppe der Formel -SO₂-Z oder Z²¹.

In den obigen allgemeinen Formeln sowie in den nachfolgenden allgemeinen Formeln können die einzelnen Formelglieder, sowohl verschiedener als auch gleicher Bezeichnung, im Rahmen ihrer Bedeutung zueinander gleiche oder voneinander verschiedene Bedeutungen haben.

Für Substituenten R stehende (C₁-C₄)-Alkylgruppen können geradkettig oder verzweigt sein und bedeuten insbesondere Methyl, Ethyl, n-Propyl, i-Propyl, n-Butyl, i-Butyl, sek.-Butyl und tert.-Butyl. Bevorzugt sind Methyl und Ethyl Analoges gilt für (C₁-C₄)Alkoxygruppen.

Für Substituenten R stehende Arylgruppen sind insbesondere die Phenylgruppe. Eine für R¹ stehende substituierte Arylgruppe ist insbesondere eine mit ein, zwei oder drei voneinander unabhängigen Gruppen aus der Reihe (C₁-C₄)-Alkyl, (C₁-C₄)-Alkoxy, Hydroxy, Sulfo, Carboxy, Amido oder Halogen substituierte Phenylgruppe. Für Substituenten R stehendes Halogen ist insbesondere Fluor, Chlor und Brom, wobei Fluor und Chlor bevorzugt sind.

Alkalisch eliminierbare Substituenten Z¹, die in β-Stellung der Ethylgruppe von Z stehen, sind beispielsweise Halogenatome, wie Chlor und Brom, Estergruppen organischer Carbon- und Sulfonsäuren, wie Alkylcarbonsäuren, ggf. substituierter Benzolcarbonsäuren und ggf. substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino.

Z ist bevorzugt Vinyl, β-Chlorethyl und insbesondere bevorzugt β-Sulfatoethyl.

Die Gruppen "Sulfo", "Carboxy", "Thiosulfato", "Phosphato", und "Sulfato" schließen sowohl deren Säureform als auch deren Salzform ein. Demgemäß bedeuten Sulfogruppen Gruppen entsprechend der allgemeinen Formel -SO₃M, Thiosulfatogruppen Gruppen entsprechend der allgemeinen Formel -S-SO₃M, Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M, jeweils mit M der obengenannten Bedeutung.

Die Farbstoffe der allgemeinen Formel (I) bis (III) können innerhalb der Bedeutung von Z unterschiedliche faserreaktive Gruppen -SO₂Z besitzen. Insbesondere können die faserreaktiven Gruppen -SO₂Z zum einen Vinylsulfonylgruppen und zum anderen Gruppen -CH₂CH₂Z¹, bevorzugt β-Sulfatoethylsulfonyl-Gruppen, bedeuten. Enthalten die Farbstoffe der allgemeinen Formel (I) bis (III) teilweise Vinylsulfonylgruppen, so liegt der Anteil des jeweiligen Farbstoffes mit der Vinylsulfonylgruppe bis zu etwa 30 Mol-%, bezogen auf die jeweilige Gesamtfarbstoffmenge, vor.

Für M stehendes Alkali ist insbesondere Lithium, Natrium und Kalium. Bevorzugt steht M für Wasserstoff oder Natrium.

Die Reste R¹ bis R¹³ sind bevorzugt Wasserstoff, R⁶ , R⁷, R¹² und R¹³ sind außerdem bevorzugt Sulfo.

Im Falle, daß A für Phenylen und X¹ für -SO₂Z stehen, steht die SO₂Z-Gruppe bevorzugt in meta- oder para-Stellung zum Stickstoffatom. In der Gruppe der allgemeinen Formel (1) steht die Carbonamid-Gruppe bevorzugt in para- oder meta-Position zur Diazogruppe. Im Falle, daß A für Naphthylen steht, steht die Bindung, die zum Stickstoffatom führt, bevorzugt in β-Stellung an den Naphthalinkern gebunden. Im Falle, daß D¹ oder D² für eine Gruppe der allgemeinen Formel (6) steht, steht die Bindung, die zur Diazogruppe führt bevorzugt in β-Stellung an den Naphthalinkern gebunden. Im Falle, daß D¹ oder D² für eine Gruppe der allgemeinen Formel (5) und X² für -SO₂Z stehen, steht die SO₂Z-Gruppe bevorzugt in meta- oder para-Stellung zur Diazogruppe.

Beispiele für für A stehende Substituenten sind insbesondere 1,2-Phenylen, 1,3-Phenylen, 1,4-Phenylen, 2-Chlor-1,4-phenylen, 2-Chlor-1,5-phenylen, 2-Brom-1,4-phenylen, 2-Sulfo-1,4-phenylen, 2-Sulfo-1,5-phenylen, 2-Methoxy-1,5-phenylen, 2-Ethoxy-1,5-phenylen, 2,5-Dimethoxy-1,4-phenylen, 2-Methoxy-5-methyl-1,4-phenylen, 2-Methyl-1,4-phenylen, 2,6-Naphthylen, 2,8-Naphthylen, 1-Sulfo-2,6-naphthylen, 6-Sulfo-2,8-naphthylen oder 1,2-Ethylen und 1,3-Propylen.

Besonders bevorzugt steht A für 1,3-Phenylen, 1,4-Phenylen, 2-Sulfo-1,4-phenylen, 2-Methoxy-1,5-Phehylen, 2,5-Dimethoxy-1,4-phenylen, 2-Methoxy-5-methyl-1,4-phenylen oder 1,2-Ethylen und 1,3-Propylen, wobei im Falle der beiden zuletzt genannten Alkylengruppen der Rest R¹ bevorzugt Phenyl und 2-Sulfophenyl bedeutet.

k bedeutet bevorzugt die Zahl 2 oder 3.

Beispiele für Gruppen D¹ bis D⁸ der allgemeinen Formel (5) und (6) sind 2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-4-(β-sulfatoethylsulfonyl)-phenyl, 2-Chlor-5-(β-sulfatoethylsulfonyl)-phenyl, 2-Brom-4-(β-sulfatoethylsulfonyl)-phenyl, 2-Sulfo-4-(β-sulfatoethylsulfonyl)-phenyl, 2-Sulfo-5-(β-sulfatoethylsulfonyl)-phenyl, 2-Methoxy-5-(β-sulfatoethylsulfonyl)-phenyl, 2-Ethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-Methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2- oder 3- oder 4-Vinylsulfonyl-phenyl, 2-Sulfo-4-vinylsulfonyl-phenyl, 2-Chlor-4-(β-chlorethylsulfonyl)-phenyl, 2-Chlor-5-(β-chlorethylsulfonyl)-phenyl, 3- oder 4-(β-Acetoxyethylsulfonyl)-phenyl, 6- oder 8-(β-Sulfatoethylsulfonyl)-naphth-2-yl, 6-(β-Sulfatoethylsulfonyl)-1-sulfo-naphth-2-yl und 8-(β-Sulfatoethylsulfonyl)-6-sulfonaphth-2-yl, bevorzugt hiervon 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4.-(β-sulfatoethylsulfonyl)-phenyl und 3- oder 4-Vinylsulfonyl-phenyl.

In der allgemeinen Formel (II) ist R bevorzugt Wasserstoff oder eine Gruppe der Formel (14), wobei M die oben angegebene Bedeutung hat.

In der allgemeinen Formel (II) ist D³ bevorzugt 2-(β-Sulfatoethylsulfonyl)-phenyl, 3-(β-Sulfatoethylsulfonyl)-phenyl, 4-(β-Sulfatoethylsulfonyl)-phenyl, 2-Sulfo-4-(β-sulfatoethylsulfonyl)-phenyl, 2-Methoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 6-(β-Sulfatoethylsulfonyl)-1-sulfo-naphth-2-yl, 2-, 3- oder 4-Vinylsulfonyl-phenyl, 1-Sulfo-4-(2,4-diftuor-pyrimidin-6-yl)-amino-2-phenyl, 1-Sulfo-4-(4,6-difluor-pyrimidin-2-yl)-amino-2-phenyl, 2-Sulfo-4-(2,4-difluor-pyrimidin-6-yl)-amino-1-phenyl oder 2-Sulfo-4-( 4,6-difluor-pyrimidin-2-yl)-amino-1-phenyl.

In der allgemeinen Formel (11) steht im Falle, daß D³ für eine Gruppe der allgemeinen Formel (6) steht, die Bindung, die zur Diazogruppe führt bevorzugt in β-Stellung an den Naphthalinkern von (6) gebunden.

In der allgemeinen Formel (7) sind R²¹ bis R²³ bevorzugt Wasserstoff und R²¹ und R²² sind außerdem bevorzugt Sulfo.

In den allgemeinen Formeln (11) und (12) sind die Reste R²' bis R⁴' bevorzugt Wasserstoff oder Methyl, R²' ist bevorzugt auch Phenyl und R³', R⁴' sind bevorzugt 2-Sulfoethyl, 2-, 3- oder 4-Sulfophenyl, 3- oder 4-Trimethylammoniumphenyl-sulfat, 3- oder 4-Trimethylammoniumphenyl-chlorid, oder R³' und R⁴' bilden ein cyclisches Ringsystem, das bevorzugt der Formel -(CH₂)₂-O-(CH₂)₂- entspricht.

W ist bevorzugt 1,3-Phenylen, 1,4-Phenylen, 2-Sulfo-1,4-phenylen, 2-Methoxy-1,5-phenylen, 2,5-Dimethoxy-1,4-phenylen, 2-Methoxy-5-methyl-1,4-phenyfen, 1,2-Ethylen, 1,3-Propylen.

Beispiele für die Gruppen Q¹ und Q² in der allgemeinen Formel (9) sind unabhängig voneinander Fluor, Chlor, Hydroxy, Methoxy, Ethoxy, Phenoxy, 3-Sulfophenoxy, 4-Sulfophenoxy, Methylmercapto, Cyanamido, Amino, Methylamino, Ethylamino, Morpholino, Piperidino, Phenylamino, Methylphenylamino, 2-Sulfophenylamino, 3-Sulfophenylamino, 4-Sulfophenylamino, 2,4-Disulfophenylamino, 2,5-Disulfophenylamino, 3-Trimethylammoniumphenylamino, 4-Trimethylammoniumphenylamino, 2-Sulfoethylamino, N-Methyl-2-sulfoethylamino, Pyridino, 3-Carboxypyridino, 4-Carboxypyridino, 3-Carbamoylpyridino, 4-Carbamoylpyridino, 2-(2-Sulfatoethylsülfonyt)-Phenylamino, 3-(2-Sulfatoethylsulfonyl)-phenylamino, 4-(2-Sulfatoethylsulfonyl)-phenylamino, N-Ethyl-3-(2-sulfatoethylsulfonyl)-phenylamino, N-Ethyl-4-(2-sulfatoethylsulfonyl)-phenylamino, 2-Carboxy-5-(2-sulfatoethylsulfonyl)-phenylamino), 2-Chlor-4-(2-sulfatoethylsulfonyl)-phenylamino, 2-Chlor-5-(2-sulfatoethylsulfonyl)-phenylamino, 2-Brom-4-(2-sulfatoethylsulfonyl)-phenylamino, 2-Sulfo-4-(2-sulfatoethylsulfonyl)-phenylamino, 2-Sulfo-5-(2-sulfatoethylsulfonyl)-phenylamino, 2-Methoxy-5-(2-sulfatoethylsulfonyl)-phenylamino, 2,5-Dimethoxy-4-(2-sulfatoethylsulfonyl)-phenylamino, 2-Methoxy-5-methyl-4-(2-sulfatoethylsulfonyl)-phenylamino, 2-Methyl-4-(2-sulfatoethylsulfonyl)-phenylamino, 2-(Vinyisulfonyl)-phenylamino, 3-(Vinylsulfonyl)-phenylamino, 4-(Vinylsulfonyl)-phenylamino), N-Ethyl-3-(vinylsulfonyl)-phenylamino, N-Ethyl-4-(vinylsulfonyl)-phenylamino, 6-(2-Sulfatoethylsulfonyl)-naphth-2-ylamino, 8-(2-Sulfatoethylsulfonyl)naphth-2-ylamino, 8-(2-Sulfatoethylsulfonyl)-6-sulfo-naphth-2-ylamino, 3-(2-(2-Sulfatoethylsulfonyl)-ethylcarbamoyl)-phenylamino, 4-(2-(2-Sulfatoethylsulfonyl)-ethylcarbamoyl)-phenylamino, 3-(2-(Vinylsulfonyl)-ethylcarbamoyl)-phenylamino, 4-(2-(Vinylsulfonyl)-ethylcarbamoyl)-phenylamino, 4-(N-Methyl-2-(2-sulfatoethylsulfonyl)-ethylcarbamoyl)-phenylamino, 4-(N-Phenyl-2-(2- , sulfatoethylsulfonyl)-ethylcarbamoyl)-phenylamino, 4-(3-(2-Sulfatoethylsulfonyl)-phenylcarbamoyl)-phenylamino, 4-(4-(2-Sulfatoethylsulfonyl)-phenylcarbamoyl)-phenylamino, 3-(3-(2-Sulfatoethylsulfonyl)-phenylcarbamoyl)-phenylamino, 3-(4-(2-Sulfatoethylsulfonyl)-phenylcarbamoyl)-phenylamino, 3-(2-Sulfatoethylsulfonyl)-propylamino, N-Methyl-N-(2-(2-sulfatoethylsulfonyl)-ethyl)-amino, N-Phenyl-N-(2-(2-sulfatoethylsulfonyl)-ethyl)-amino,N-Phenyl-N-(3-(2-sulfatoethylsulfonyl)-propyl)-amino.

Bevorzugt stehen die Gruppen Q¹ und Q² in der allgemeinen Formel (9) unabhängig voneinander für Fluor, Chlor, Cyanamido, Morpholino, 2-Sulfophenylamino, 3-Sulfophenylamino, 4-Sulfophenylamino, 3-Trimethylammoniumphenylamino, 4-Trimethylammoniumphenylamino, N-Methyl-2-sulfoethylamino, 3-Carboxypyridino, 4-Carboxypyridino, 3-Carbamoylpyridino, 4-Carbamoylpyridino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino), 4-(3-(2-Sulfatoethylsulfonyl)-phenylcarbamoyl)-phenylamino, 4-(4-(2-Sulfatoethylsulfonyl)-phenylcarbamoy)-phenylamino, 3-(3-(2-Sulfatoethylsulfonyl)-phenylcarbamoyl)-phenylamino, 3-(4-(2-Sulfatoethylsulfonyl)-phenylcarbamoyl)-phenylamino, N-Methyl-N-(2-(2-sulfatoethylsulfonyl)-ethyl)-amino, N-Phenyl-N-(2-(2-sulfatoethylsulfonyl)-ethyl)-amino.

Besonders bevorzugt stehen die Gruppen Q¹ und Q² in der allgemeinen Formel (9) unabhängig voneinander für Fluor, Chlor, Cyanamido, Morpholino, 2-Sulfophenylamino, 3-Sulfophenylamino, 4-Sulfophenylamino, 3-Trimethylammoniumphenylamino, 4-Trimethylammoniumphenylamino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino), N-Methyl-N-(2-(2-sulfatoethylsulfonyl)-ethyl)-amino, N-Phenyl-N-(2-(2-sulfatoethylsulfonyl)-ethyl)-amino.

In der allgemeinen Formel (13) sind die Reste R²⁴ bis R²⁶ bevorzugt Methyl oder Ethyl.
Anion B⁻ ist bevorzugt Sulfat oder Chlorid.
In der allgemeinen Formel (13) steht die quarternäre Ammoniumgruppe bevorzugt in meta- oder para-Stellung zur freien Bindung am Benzolkern.

Beispiele für die Gruppe Z²¹ sind 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl, 4,5-Difluorpyrimidin-6-yl, 5-Chlor-4-fluor-pyrimidin-6-yl, 2,4,5-Trichlor-pyrimidin-6-yl, 4,5-Dichlor-pyrimidin-6-yl, 2,4-Dichlor-pyrimidin-6-yl, 4-Fluor-pyrimidin-6-yl, 4-Chlorpyrimidin-6-yl, oder eine Gruppe der allgemeinen Formel (9) mit den oben angegebenen Beispielen für Q¹ und Q² oder 2,3-Dichlorchinoxalin-6-carbonyl.

Bevorzugt bedeutet Z²¹ 2,4-Difluor-pyrimidin-6-yl, 4,6-Difluor-pyrimidin-2-yl, 5-Chlor-2,4-difluor-pyrimidin-6-yl, 5-Chlor-4,6-difluor-pyrimidin-2-yl oder eine Gruppe der allgemeinen Formel (9) mit den oben angegebenen bevorzugten Gruppen für Q¹ und Q².

Besonders bevorzugt steht Z²¹ für 2,4-Difluor-pyrimidin-6-yl, 5-Chlor-2,4-difluorpyrimidin-6-yl oder für eine Gruppe der allgemeinen Formel (9) mit den oben angegebenen besonders bevorzugten Gruppen Q¹ und Q².

Bevorzugte Mischungen enthalten einen oder mehrere Farbstoffe der allgemeinen Formel (la) 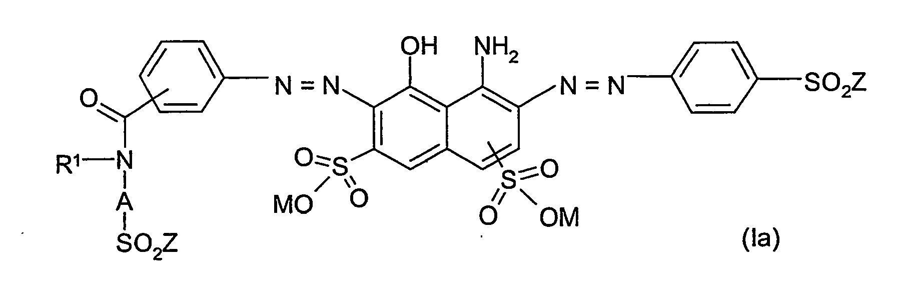 und einen oder mehrere Farbstoffe der allgemeinen Formel (IIa) 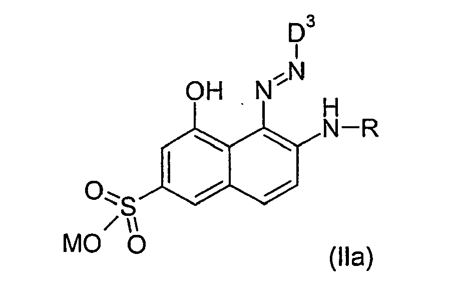 sowie gegebenenfalls einen oder mehrere Farbstoffe der allgemeinen Formeln (IIIa) bis (IIIf).

In den allgemeinen Formeln (la) und (IIa) haben M, A, R¹, Z, D³ und R die obengenannten Bedeutungen.
In der allgemeinen Formel (Ia) sind besonders bevorzugt A Phenylen und Z Vinyl oder β-Sulfatoethyl.
In der allgemeinen Formel (la) sind ganz besonders bevorzugt A Phenylen, R¹ Wasserstoff und Z Vinyl oder β-Sulfatoethyl.

Die erfindungsgemäßen Farbstoffmischungen enthalten Bisazofarbstoffe der allgemeinen Formel (I) in einer Menge von 30 bis 95 Gew.-%, bevorzugt 50 bis 90 Gew.-%, Monoazofarbstoffe der allgemeinen Formel (II) in einer Menge von 5 bis 70 Gew.-%, bevorzugt 10 bis 50 Gew.-% und Farbstoffe der allgemeinen Formeln (IIIa) bis (IIIf) in einer Menge von 0 bis 40 Gew.-%, bevorzugt 5 bis 25 Gew.-%.

Optional können die erfindungsgemäßen Farbstoffmischungen außerdem einen oder mehrere Monoazofarbstoffe der allgemeinen Formeln (15) oder (16) in einer Menge bis zu 10 Gew.-%, bevorzugt bis zu 5 Gew.-% enthalten, 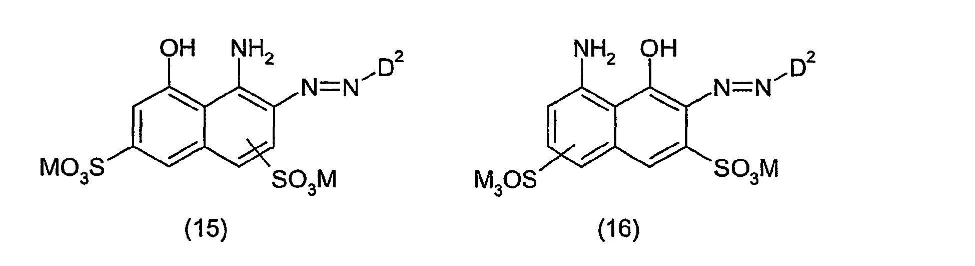 worin M und D2 die obengenannten Bedeutungen haben. Besonders bevorzugt ist D2 4-(2-Sulfatoethylsulfonyl)-phenyl oder 4-Vinylsulfonyl-phenyl.

Farbstoffe der allgemeinen Formel (I) sind aus EP-A1046677 bekannt, die Farbstoffe der allgemeinen Formel (II) sind teilweise aus WO 9610610, WO 9725377, WO 9947608 und EP-A 922735 bekannt.

Farbstoffe der allgemeinen Formeln (15) und (16) sind über Standardsynthesemethoden zugänglich oder werden teilweise während der Synthese von Farbstoffen der allgemeinen Formel (1) gebildet. Sie werden üblicherweise als Nuancierkomponenten eingesetzt.

Die erfindungsgemäßen Farbstoffmischungen können als Präparation in fester oder in flüssiger (gelöster) Form vorliegen. In fester Form enthalten sie, so weit erforderlich, die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumcitrat, Natriumborat, Natriumhydrogencarbonat, Natriumdihydrogenphosphat und Dinatriumhydrogenphosphat, Färbehilfsmittel, Entstaubungsmittel und geringe Mengen an Sikkativen; falls sie in flüssiger, wäßriger Lösung (einschließlich des Gehaltes von Verdickungsmitteln, wie sie bei Druckpasten üblich sind) vorliegen, können sie auch Substanzen enthalten, die die Haltbarkeit dieser Präparationen gewährleisten, wie beispielsweise schimmelverhütende Mittel.

In fester Form liegen die erfindungsgemäßen- Farbstoffmischungen im allgemeinen als elektrolytsalzhaltige Pulver oder Granulate (im nachfolgenden allgemein als Präparation bezeichnet) mit gegebenenfalls einem oder mehreren der obengenannten Hilfsmittel vor. In den Präparationen ist die Farbstoffmischung zu 10 bis 90 Gew.-%, bezogen auf die enthaltene Präparation, enthalten. Die Puffersubstanzen liegen in der Regel in einer Gesamtmenge von bis zu 5 Gew.-%, bezogen auf die Präparation, vor.

Sofern die erfindungsgemäßen Farbstoffmischungen in wäßriger Lösung vorliegen, beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen lassen sich in an und für sich üblicher Verfahrensweise herstellen, wie durch mechanisches Vermischen der Einzelfarbstoffe, sei es in Form von deren Farbstoffpulvern oder -granulaten oder deren Syntheselösungen oder von wäßrigen Lösungen der Einzelfarbstoffe generell, welche noch übliche Hilfsmittel enthalten können oder durch dem Fachmann geläufige Diazotierung und Kupplung geeigneter Mischungen von Diazo- und Kupplungskomponenten in den gewünschten Mengenverhältnissen.

Beispielsweise kann, wenn die Diazokomponenten mit den Gruppen D² und D³ gemäß den allgemeinen Formeln (I) und (II) gleiche Bedeutung besitzen (D² = D³), ein Amin der allgemeinen Formel (17)

D² - NH₂ (17),

worin D² wie oben angegeben definiert ist, in üblicher Weise diazotiert und die erhaltene Diazoniumverbindung anschließend in wässrigem Medium bei einem pH-Wert unterhalb von 3 mit einer Mischung aus 4-Amino-5-hydroxy-naphthalin-2,7-disulfonsäure oder 4-Amino-5-hydroxy-naphthalin-1,7-disulfonsäure und einer, gegebenenfalls N-substituierten, 6-Amino-4-hydroxy-naphthalin-2-sulfonsäure oder 3-Amino-5-hydroxy-naphthalin-2,7-disulfonsäure umgesetzt werden, wobei eine Mischung von zwei roten Monoazofarbstoffen der Formeln (15) und (II) entsteht. Anschließend wird ein Amin der allgemeinen Formel (18)

D¹ - NH₂ (18),

worin D² wie oben angegeben definiert ist, in üblicher Weise diazotiert und die erhaltene Diazoniumverbindung dann in zweiter Stufe mit der in erster Stufe erhaltenen Mischung der Monoazofarbstoffe der allgemeinen Formeln (15) und (II) bei einem pH zwischen 3 und 7,5 gekuppelt, wobei eine Mischung der Farbstoffe der allgemeinen Formeln (I) und (II) erhalten wird.

Alternativ kann die erfindungsgemäße Farbstoffmischung für den Fall, daß die Diazokomponenten mit den Gruppen D¹ und D³ gemäß den allgemeinen Formeln (1) und (II) gleiche Bedeutung besitzen (D¹ = D³), hergestellt werden, indem man ein Amin der allgemeinen Formel (18), worin D¹ wie in Anspruch 1 angegeben definiert ist, in üblicher Weise diazotiert und die erhaltene Diazoniumverbindung anschließend mit einer wässrigen Lösung oder Suspension einer Mischung mit festgelegtem Verhältnis eines roten Monoazofarbstoffs gemäß der allgemeinen Formel (15) und einer, gegebenenfalls substituierten, 6-Amino-4-hydroxy-naphthalin-2-sulfonsäure zuerst bei einem pH-Wert unterhalb von 3 zu einer Mischung zweier roter Monoazofarbstoffe gemäß den allgemeinen Formeln (15) und (II) umsetzt und nach beendeter saurer Kupplung durch Erhöhung des pH-Wertes auf 4 - 7,5 die zweite Kupplung des Monoazofarbstoffs der allgemeinen Formel (15) durchgeführt wird,
wobei man eine Mischung der beiden Farbstoffe der allgemeinen Formeln (I) und (II) erhält.

Die roten Monoazofarbstoffe der allgemeinen Formel (15) können hergestellt werden indem man ein Amin der allgemeinen Formel (17), worin D² wie in Anspruch 1 angegeben definiert ist, in üblicher Weise diazotiert und die erhaltene Diazoniumverbindung anschließend in wässrigem Medium bei einem pH-Wert unterhalb von 2 mit 4-Amino-5-hydroxy-naphthalin-2,7-disulfonsäure bzw. 4-Amino-5-hydroxy-naphthalin-1,7-disulfonsäure in erster Stufe kuppelt.

Die erfindungsgemäße Farbstoffmischung wird in an und für sich bekannter Weise, gegebenenfalls nach Zusatz einer oder mehrerer, wie zwei oder drei, Gelbkomponenten gemäß den allgemeinen Formeln (IIIa) bis (IIIf) in fester Form oder als wässrige Lösung, durch Aussalzen beispielsweise mit Kochsalz oder Kaliumchlorid oder durch Sprühtrocknung isoliert.

Es können auch die bei der Synthese der Farbstoffmischungen der allgemeinen Formel (I) und (II) anfallenden Lösungen, gegebenenfalls nach Zusatz einer oder mehrerer, wie zwei oder drei, Gelbkomponenten gemäß den allgemeinen Formeln (IIIa) bis (IIIf) in fester Form oder als wässrige Lösung sowie gegebenenfalls einer Puffersubstanz und gegebenenfalls nach Aufkonzentrierung oder Verdünnen, direkt als Flüssigpräparatiönen der färberischen Verwendung zugeführt werden.

Farbstoffmischungen die neben β-Chloroethylsulfonyl- oder β-Thiosulfatoethylsulfonyl- oder β-Sulfatoethylsulfonyl-Gruppen auch Vinylsulfonylgruppen als reaktive Reste haben, können nicht nur ausgehend von entsprechend substituierten Vinylsulfonyl-Anilinen oder -Naphthylaminen synthetisiert werden, sondern auch durch Umsetzung einer Farbstoffmischung, worin Z für β-Chloroethyl, β-Thiosulfatoethyl, oder β-Sulfatoethyl steht, mit einer für den gewünschten Anteil erforderlichen Menge an Alkali und Überführung der genannten β-substituierten Ethylsulfonylgruppen in Vinylsulfonylgruppen erhalten werden. Diese Überführung erfolgt in einer dem Fachmann geläufigen Art und Weise.

Die erfindungsgemäßen Farbstoffmischungen besitzen wertvolle anwendungstechnische Eigenschaften. Sie werden zum Färben oder Bedrucken von hydroxy-und/oder carbonamidgruppenhaltigen Materialien, beispielsweise in Form von Flächengebilden, wie Papier und Leder oder von Folien, wie beispielsweise aus Polyamid, oder in der Masse, wie beispielsweise von Polyamid und Polyurethan, insbesondere aber von diesen Materialien in Faserform verwendet.

Die vorliegende Erfindung betrifft somit auch die Verwendung der erfindungsgemäßen Farbstoffmischungen zum Färben oder Bedrucken dieser Materialien bzw. Verfahren zum Färben oder Bedrucken solcher Materialien in an und für sich üblichen Verfahrensweisen, bei welchen man eine erfindungsgemäße Farbstoffmischung oder deren Einzelkomponenten (Farbstoffe) einzeln zusammen als Farbmittel einsetzt. Bevorzugt kommen die Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide sowie chemisch modifizierte Cellulosefasern, wie aminierte Cellulosefasern oder Fasern, wie sie beispielsweise in den PCT-Patentanmeldungs-Veröffentlichungen Nrs. WO 96/37641 und WO 96/37642 sowie in den europäischen Patentanmeldungs-Veröffentlichungen Nrs. 0 538.785 und 0 692 559 beschrieben sind.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Farbstoffmischungen lassen sich auf den genannten Substraten, insbesondere auf den genannten Fasermaterialien, nach den für wasserlösliche, insbesondere nach den für faserreaktive Farbstoffe bekannten Anwendungstechniken applizieren und fixieren. So erhält man mit ihnen auf Cellulosefasern nach den Ausziehverfahren sowohl aus kurzer als auch aus langer Flotte, beispielsweise im. Verhältnis Ware zu Flotte von 1 : 5 bis 1 : 100, bevorzugt 1: 6 bis 1 : 30; unter Verwendung von verschiedensten säurebindenden Mitteln und gegebenenfalls neutralen Salzen soweit erforderlich, wie Natriumchlorid oder Natriumsulfat, Färbungen mit sehr guten Farbausbeuten. Man färbt bevorzugt in wäßrigem Bad bei Temperaturen zwischen 40 und 105°C, gegebenenfalls bei einer Temperatur bis zu 130°C unter Druck, bevorzugt jedoch bei 30 bis 95°C, insbesondere 45 bis 65°C, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, oder in kontinuierlicher Färbeweise, beispielsweise mittels eines Pad-Dry-Pad-Steam-Verfahrens, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mit einer Natriumbicarbonat oder ein anderes säurebindendes Mittel enthaltenden Druckpaste und anschließendes Dämpfen bei 100 bis 103°C, oder zweiphasig, beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe der erfindungsgemäßen Farbstoffmischungen auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen, des weiteren Alkalisilicate. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Trinatriumphosphat oder Wasserglas oder Mischungen derselben, wie beispielsweise Mischungen aus Natronlauge und Wasserglas.

Die erfindungsgemäßen Farbstoffmischungen zeichnen sich auf den Cellulosefasermaterialien bei Anwendung in den Färbe- und Druckverfahren durch eine hervorragende Farbstärke in Gegenwart keiner oder nur sehr geringer Alkali-oder Erdalkaliverbindungen aus. So benötigt man beispielsweise für eine geringe Farbtiefe kein Elektrolytsalz, für eine mittlere Farbtiefe nicht mehr als 5g/l an Elektrolytsalz und für große Farbtiefen nicht mehr als 10 g/l an Elektrolytsalz.

Eine geringe Farbtiefe bezeichnet erfindungsgemäß den Einsatz von 2 Gew.-% Farbstoff bezogen auf das zu färbende Substrat, eine mittlere Farbtiefe bezeichnet erfindungsgemäß den Einsatz von 2 bis 4 Gew.-% Farbstoff bezogen auf das zu färbende Substrat und eine große Farbtiefe bezeichnet erfindungsgemäß den Einsatz von 4 bis 10-Gew.-% Farbstoff bezogen auf das zu färbende Substrat.

Die mit den erfindungsgemäßen Farbstoffmischungen erhältlichen Färbungen und Drucke besitzen klare Nuancen; insbesondere weisen die Färbungen und Drucke auf Cellulosefasermaterialien eine gute Lichtechtheit und insbesondere gute Naßechtheiten, wie Wasch-, Walk-, Wasser-, Seewasser-, Überfärbe- und saure sowie alkalische Schweißechtheiten, desweiteren eine gute Plissierechtheit, Bügelechtheit und Reibechtheit auf. Weiterhin zeigen die Cellulosefärbungen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit leicht auswaschen lassen.

Des weiteren können die erfindungsgemäßen Farbstoffmischungen auch für das faserreaktive Färben von Wolle Verwendung finden. Auch läßt sich filzfrei oder filzarm ausgerüstete Wolle (vgl. beispielsweise H. Rath, Lehrbuch der Textilchemie, Springer-Verlag, 3. Auflage (1972), S. 295-299, insbesondere die Ausrüstung nach dem sogenannten Hercosett-Verfahren (S. 298); J. Soc. Dyers and Colorists 1972, 93-99, und 1975, 33-44.) mit sehr guten Echtheitseigenschaften färben. Das Verfahren des Färbens auf Wolle erfolgt hierbei in üblicher und bekannter Färbeweise aus saurem Milieu. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Um eine brauchbare Egalität der Färbung zu erreichen, empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. So wird beispielsweise die erfindungsgemäße Farbstoffmischung bevorzugt zunächst aus saurem Färbebad mit einem pH von etwa 3,5 bis 5,5 unter Kontrolle des pH-Wertes dem Ausziehprozeß unterworfen und der pH-Wert sodann, gegen Ende der Färbezeit, in den neutralen und gegebenenfalls schwach alkalischen Bereich bis zu einem pH-Wert von 8,5 verschoben, um besonders zur Erzielung von hohen Farbtiefen die volle reaktive Bindung zwischen den Farbstoffen der erfindungsgemäßen Farbstoffmischungen und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder in geschlossenen Färbeapparaturen bei Temperaturen bis zu 106°C ausgeführt werden. Da die Wasserlöslichkeit der erfindungsgemäßen Farbstoffmischungen sehr gut ist, lassen sie sich auch mit Vorteil bei üblichen kontinuierlichen Färbeverfahren einsetzen. Die Farbstärke der erfindungsgemäßen Farbstoffmischungen ist sehr hoch.

Die erfindungsgemäßen Farbstoffmischungen liefern auf den genannten Materialien, bevorzugt Fasermaterialien, marineblaue bis tiefschwarze Färbungen mit guten Echtheitseigenschaften.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter. Die in den Beispielen formelmäßig beschriebenen Verbindungen sind in Form der Natriumsalze geschrieben, da sie im allgemeinen in Form ihrer Salze, vorzugsweise Natrium- oder Kaliumsalze, hergestellt und isoliert und in Form ihrer Salze zum Färben verwendet werden. Die in den nachfolgenden Beispielen genannten Ausgangsverbindungen können in Form der freien Säure oder ebenso in Form ihrer Salze, vorzugsweise Alkalimetallsalze, wie Natrium- oder Kaliumsalze, in die Synthese eingesetzt werden.

### Beispiel 1

70 Teile eines elektrolythaltigen Farbstoffpulvers, das den marineblauen Disazofarbstoff der Formel (IA) 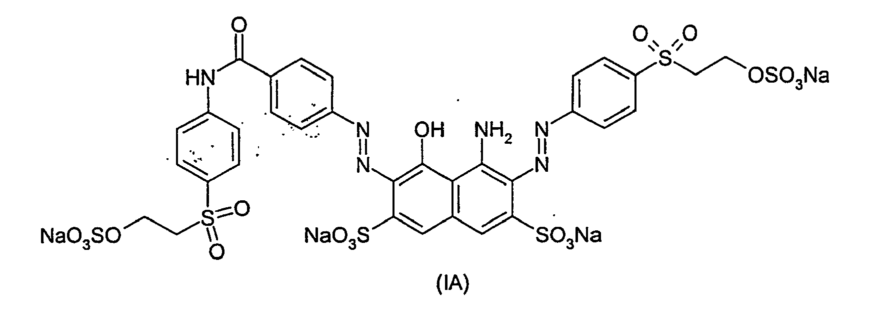 in 70%-igem Anteil enthält, 20 Teile eines elektrolythaltigen Farbstoffpulvers, das den orangeroten Monoazofarbstoff der Formel (IIA) 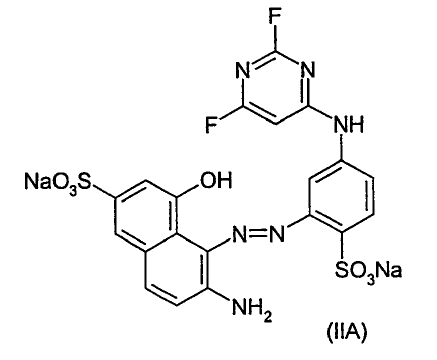 in 75%-igem Anteil enthält und 10 Teile eines elektrolythaltigen Farbstoffpulvers, das den gelben Disazofarbstoff der Formel (IIIf-1) 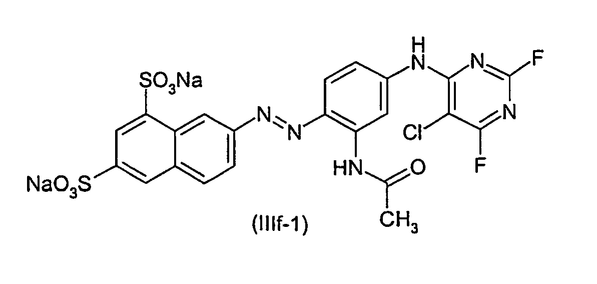 in 70%-igem Anteil enthält, werden mechanisch miteinander gemischt.

Die resultierende, erfindungsgemäße Farbstoffmischung liefert unter den für Reaktivfarbstoffe üblichen Färbebedingungen, beispielsweise auf Baumwolle, tiefschwarze Färbungen und Drucke.

### Beispiel 2

70 Teile eines elektrolythaltigen Farbstoffpulvers, das den marineblauen Disazofarbstoff der Formel (IA) in 70%-igem Anteil enthält, 20 Teile eines elektrolythaltigen Farbstoffpulvers, das den roten Monoazofarbstoff der Formel (IIB) 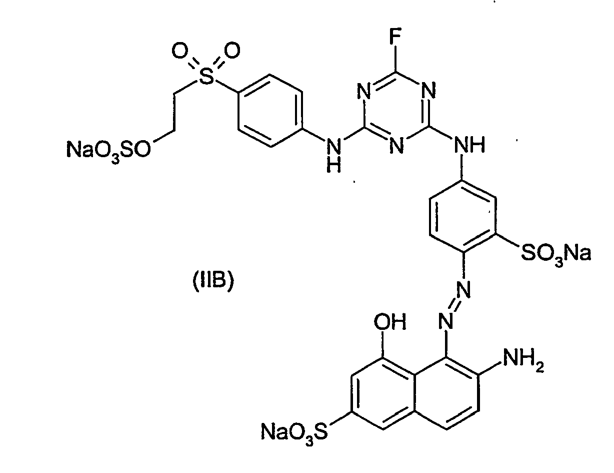 in 80%-igem Anteil enthält und 10 Teile eines elektrolythaltigen Farbstoffpulvers, das den gelben Disazofarbstoff der Formel (IIIc-1) 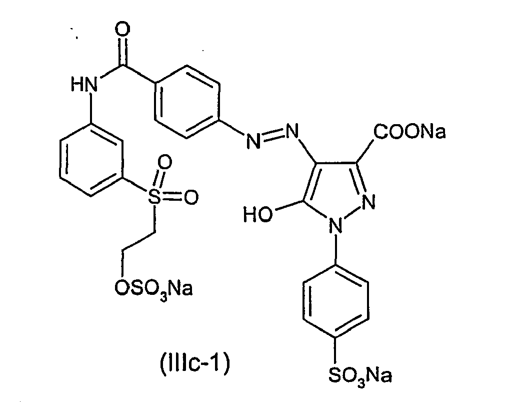 in 70%-igem Anteil enthält, werden in 500 Teilen Wasser gelöst und die erhaltene Farbstofflösung auf pH 5,5-6,5 eingestellt. Durch Eindampfen bzw. Sprühtrocknung dieser Farbstofflösung erhält man eine Farbstoffmischung, die auf Baumwolle unter den für Reaktivfarbstoffe üblichen Färbebedingungen tiefschwarze Färbungen und Drucke liefert.

### Beispiel 3

a) 281 Teile 4-(β-Sulfatoethylsulfonyl)-anilin werden in 650 Teilen Eiswasser und 180 Teilen 30%-iger Salzsäure suspendiert und durch Zutropfen von 173 Teilen 40%-iger Natriumnitritlösung diazotiert. Hierzu gibt man 223 Teile 4-Amino-5-hydroxy-naphthalin-2,7-disulfonsäure sowie 72 Teile 6-Amino-4-hydroxynaphthalin-2-sulfonsäure und kuppelt in erster Stufe bei pH 1 - 1,8 unterhalb 20°C zu einer Mischung zweier roter Monoazofarbstoffe gemäß den Formeln (15-1) und (IIC). Der angegebene pH-Bereich wird dabei durch Zusatz von insgesamt etwa 150 Teilen Natriumhydrogencarbonat eingestellt und während der Kupplungsreaktion gehalten. 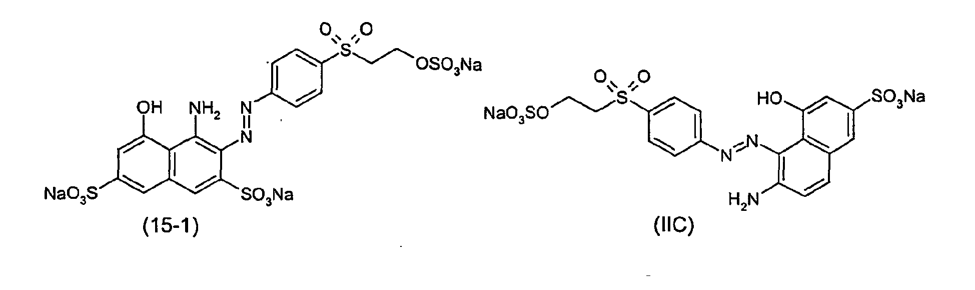
b) In einem zweiten, separaten Reaktionsgefäß werden 280 Teile 4-Amino-N-(3-((β-sulfatoethyl)-sulfonyl)-phenyl)-benzamid in 1600 Teilen Eiswasser suspendiert, mit etwa 35 Teilen Natriumcarbonat auf pH 6,5 - 7 eingestellt und mit 122 Teilen 40%-iger Natriumnitritlösung versetzt. Diese Suspension tropft man zu einer Mischung aus 450 Teilen Eis, 350 Teilen Eiswasser und 255 Teilen konzentrierter Salzsäure. Nach 2-stündiger Nachrührzeit bei 5-10°C wird der Nitritüberschuß mit Amidosulfonsäure zurückgenommen und die erhaltene Diazo-Suspension zur Mischung der roten Monoazofarbstoffe aus a) gepumpt. Anschließend wird unterhalb 25°C mit Natriumcarbonat pH 5 - 6 eingestellt und dem Reaktionsgemisch nach beendeter Kupplungsreaktion 110 Teile des gelben Monoazofarbstoffs der Formel (IIIa-1) in Form einer wässrigen Lösung zugesetzt und die entstandene 73 : 16 : 10 - Mischung der Farbstoffe (IB), (IIC) und (IIIa-1) durch Sprühtrocknung isoliert.
   Alternativ kann die erhaltene Farbstofflösung auch durch Zusatz eines PhosphatPuffers bei pH 5,5 - 6 gepuffert und durch weitere Verdünnung bzw. Konzentration als Flüssigmarke bestimmter Stärke eingestellt werden. Die erhaltene, erfindungsgemäße Farbstoffmischung färbt Baumwolle in schwarzen Tönen.

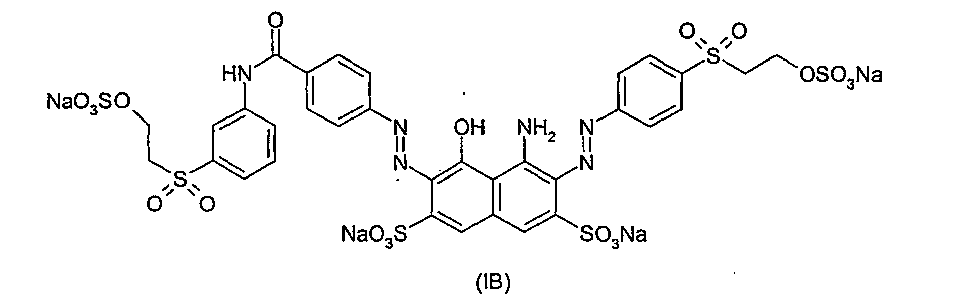

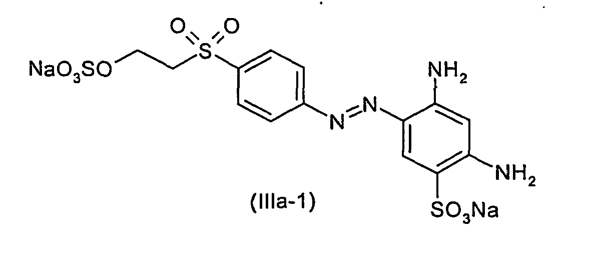

### Beispiel 4

a) 178 Teile 4-(β-Sulfatoethylsulfonyl)-anilin werden in 420 Teilen Eiswasser und 115 Teilen 30%-iger Salzsäure suspendiert und durch Zutropfen von 110 Teilen 40%-iger Natriumnitritlösung diazotiert. Hierzu gibt man 201 Teile 4-Amino-5-hydroxy-naphthalin-2,7-disulfonsäure und kuppelt in erster Stufe bei pH 1 bis 1,3 unterhalb 20°C zu einem roten Monoazofarbstoff gemäß Formel (15-1). Der angegebene pH-Bereich wird dabei durch Zusatz von insgesamt etwa 90 Teilen Natriumhydrogencarbonat eingestellt und während der Kupplungsreaktion gehalten.
b) In einem zweiten, separaten Reaktionsgefäß werden 353 Teile 4-Amino-N-(3-((β-sulfatoethyl)-sulfonyl)-phenyl)-benzamid in 1950 Teilen Eiswasser suspendiert, mit etwa 65 Teilen Natriumcarbonat auf pH 6,5 - 7 eingestellt und mit 154 Teilen 40%-iger Natriumnitritlösung versetzt. Diese Suspension tropft man zu einer Mischung aus 550 Teilen Eis, 450 Teilen Eiswasser und 320 Teilen konzentrierter Salzsäure. Nach 2-stündiger Nachrührzeit bei 5-10°C wird der Nitritüberschuß mit Amidosulfonsäure zurückgenommen und die erhaltene Diazo-Suspension zur Lösung des roten Monoazofarbstoffs aus a) gepumpt. Daraufhin setzt man diesem Reaktionsgemisch 80 Teile 3-Amino-5-hydroxy-napthalin-2,7-disulfonsäure hinzu.
   Anschließend wird unterhalb 25°C mit Natriumhydrogencarbonat zuerst pH 1,5 - 2,5 eingestellt und gehalten, wobei durch saure Kupplung auf 3-Amino-5-hydroxy-napthalin-2,7-disulfonsäure ein roter Monoazofarbstoff der Formel (IID) entsteht. Nach beendeter saurer Kupplung wird durch Zugabe von Natriumcarbonat pH 5 - 6 eingestellt und das nach beendeter zweiter Kupplungsreaktion des Monoazofarbstoffs der Formel (15-1) erhaltene Reaktionsgemisch mit 100 Teilen des gelben Disazofarbstoffs der Formel (IIIe-1) versetzt.
   Die so entstandene 70 : 20 : 10 - Mischung der Farbstoffe (IB), (IID) und (IIIe-1) wird durch Sprühtrocknung isoliert.
   Die erhaltene, erfindungsgemäße Farbstoffmischung färbt Baumwolle in schwarzen Tönen.

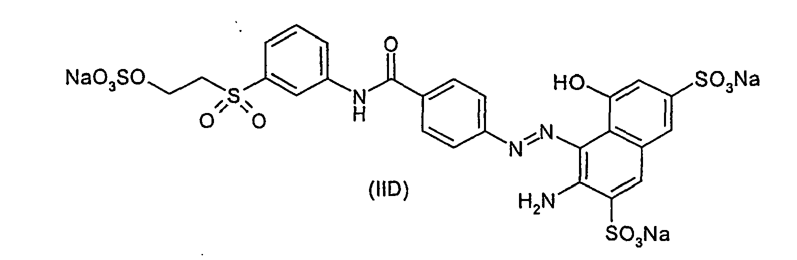

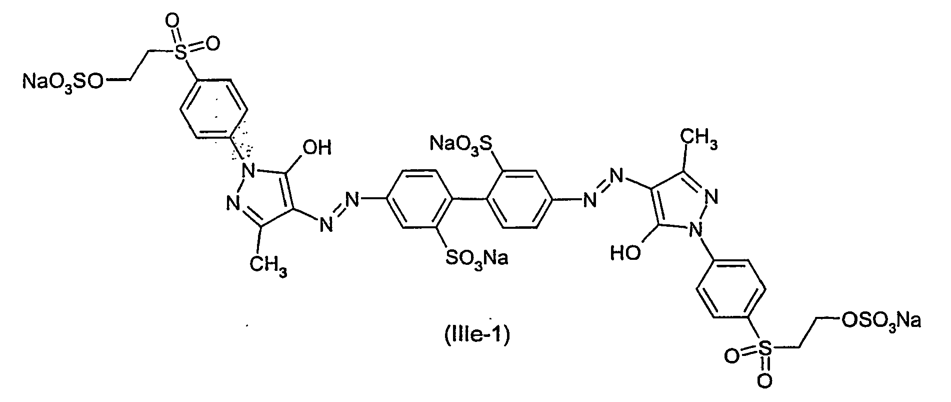

### Beispiel 5

406 Teile 4-Amino-N-(3-((β-sulfatoethyl)-sulfonyl)-phenyl)-benzamid werden in 2250 Teilen Eiswasser suspendiert, mit etwa 75 Teilen Natriumcarbonat auf pH 6,5 - 7 eingestellt und mit 177 Teilen 40%-iger Natriumnitritlösung versetzt. Diese Suspension tropft man zu einer Mischung aus 630 Teilen Eis, 520 Teilen Eiswasser und 370 Teilen konzentrierter Salzsäure. Nach 2-stündiger Nachrührzeit bei 5-10°C wird der Nitritüberschuß mit Amidosulfonsäure zurückgenommen und die erhaltene Diazo-Suspension zu einer wässrigen Lösung von 426 Teilen des roten Monoazofarbstoffs der Formel (15-1), die wie in Beispiel 4a) beschrieben, hergestellt wurde, gepumpt. Daraufhin setzt man diesem Reaktionsgemisch 80 Teile 3-Amino-5-hydroxy-napthalin-2,7-disulfonsäure und 38 Teile 5-Hydroxy-1-(4-sulfo-phenyl)-1 H-pyrazol-3-carbonsäure hinzu.
Anschließend wird unterhalb 25°C mit Natriumhydrogencarbonat zuerst pH 1,5 - 2,5 eingestellt und gehalten, wobei durch saure Kupplung ein roter Monoazofarbstoff der Formel (IID) entsteht. Nach beendeter saurer Kupplung wird durch Zugabe von Natriumcarbonat pH 5 - 6 eingestellt und die nach beendeter zweiter Kupplungsreaktion entstandene 70 : 20 : 10 - Mischung der Farbstoffe (IB), (IID) und (IIIc-1) durch Sprühtrocknung isoliert.
Die erhaltene, erfindungsgemäße Farbstoffmischung färbt Baumwolle in schwarzen Tönen.

### Beispiel 6

350 Teile 4-Amino-N-(4-((β-sulfatoethyl)-sulfonyl)-phenyl)-benzamid werden in 2000 Teilen Eiswasser suspendiert, mit etwa 44 Teilen Natriumcarbonat auf pH 6,5 - 7 eingestellt und mit 152 Teilen 40%-iger Natriumnitritlösung versetzt. Diese Suspension tropft man zu einer Mischung aus 560 Teilen Eis, 440 Teilen Eiswasser und 320 Teilen konzentrierter Salzsäure. Nach 2-stündiger Nachrührzeit bei 5-10°C wird der Nitritüberschuß mit Amidosulfonsäure zurückgenommen und die erhaltene Diazo-Suspension zu einer wässrigen Mischung von 474 Teilen des roten Monoazofarbstoffs (15-1) und 173 Teilen des roten Monoazofarbstoffs der Formel (IIC), die analog Beispiel 3a) hergestellt wurde, gepumpt. Diesem Reaktionsgemisch setzt man 44 Teile 4-(5-Hydroxy-3-methyl-pyrazol-1-yl)-benzolsulfonsäure hinzu und stellt anschließend unterhalb 25°C mit Natriumcarbonat pH 5 - 6 ein. Nach beendeter Kupplungsreaktion wird die entstandene 73 : 16 : 11 - Mischung der drei Farbstoffe (lA), (IIC) und (IIIc-2) durch Sprühtrocknung isoliert.

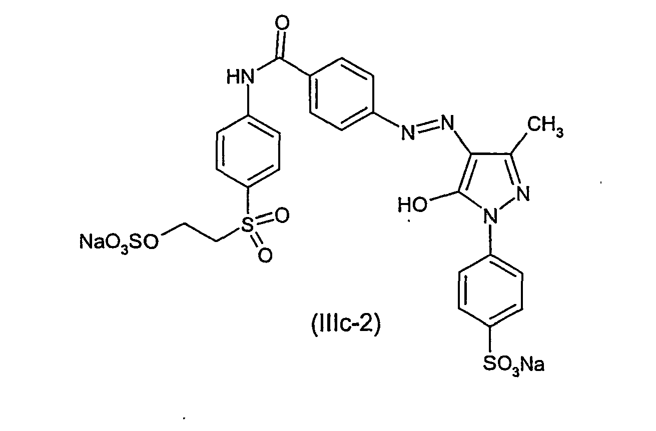

Alternativ kann die erhaltene Farbstofflösung auch durch Zusatz eines PhosphatPuffers bei pH 5,5 - 6 gepuffert und durch weitere Verdünnung bzw. Konzentration als Flüssigmarke bestimmter Stärke eingestellt werden.
Die erhaltene, erfindungsgemäße Farbstoffmischung färbt Baumwolle in schwarzen Tönen.

### Beispiel 7

a) 281 Teile 4-(β-Sulfatoethylsulfonyl)-anilin werden in 650 Teilen Eiswasser und 180 Teilen 30%-iger Salzsäure suspendiert und durch Zutropfen von 173 Teilen 40%-iger Natriumnitritlösung diazotiert. Hierzu gibt man 174 Teile 4-Amino-5-hydroxy-naphthalin-2,7-disulfonsäure, 87 Teile 6-Amino-4-hydroxy-naphthalin-2-sulfonsäure sowie 17 Teile 2,4-Diamino-benzolsulfonsäure und kuppelt in erster Stufe bei pH 1 - 1,8 unterhalb 20°C zu einer Mischung von drei Monoazofarbstoffen gemäß den Formeln (15-1), (IIC) und (IIIa-1). Der angegebene pH-Bereich wird dabei durch Zusatz von festem Natriumhydrogencarbonat eingestellt und während der Kupplungsreaktion gehalten.
b) In einem zweiten, separaten Reaktionsgefäß werden 255 Teile 4-Amino-N-(3-((β-sulfatoethyl)-sulfonyl)-phenyl)-benzamid in 1500 Teilen Eiswasser suspendiert, mit etwa 32 Teilen Natriumcarbonat auf pH 6,5 - 7 eingestellt und mit 111 Teilen 40%-iger Natriumnitritlösung versetzt. Diese Suspension tropft man zu einer Mischung aus 410 Teilen Eis, 320 Teilen Eiswasser und 235 Teilen konzentrierter Salzsäure. Nach 2-stündiger Nachrührzeit bei 5-10°C wird der Nitritüberschuß mit Amidosulfonsäure zurückgenommen und die erhaltene Diazo-Suspension zur Mischung der drei Monoazofarbstoffe aus a) gepumpt. Anschließend wird unterhalb 25°C mit Natriumcarbonat pH 5 - 6 eingestellt und die nach beendeter zweiter Kupplungsreaktion entstandene 67 : 23 : 10 - Mischung der Farbstoffe (IB), (IIC) und (IIIb-1) durch Sprühtrocknung isoliert.
   Die erhaltene, erfindungsgemäße Farbstoffmischung färbt Baumwolle in schwarzen Tönen.

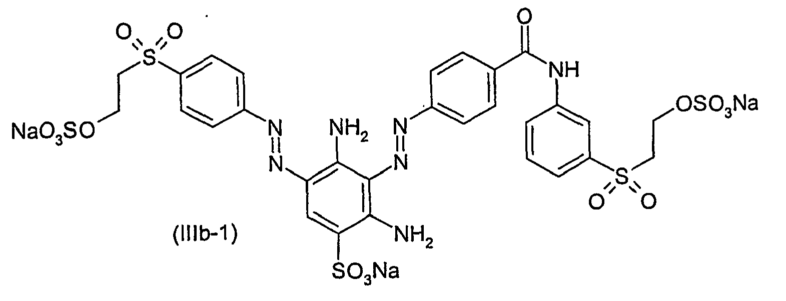

### Beispiele 8 bis 159

Die nachfolgenden Tabellenbeispiele beschreiben weitere erfindungsgemäße Mischungen der Farbstoffe der allgemeinen Formeln (I) bis (III), die jeweils in Form der Natriumsalze angeführt sind. Die Mischungsverhältnisse sind in Gewichtsprozent angegeben. Die Farbstoffmischungen liefern nach den für Reaktivfarbstoffen üblichen Färbemethoden, beispielsweise auf Baumwolle, schwarze Färbungen.

Farbstoff-Mischungen gemäß Beispiel 1 oder 2

| Beispiel | Farbstoff nach allg. Formel (I) | Farbstoff nach allg. Formel (II) | Farbstoff nach allg. Formel (III) | Verhältnis (I):(II):(III) |
|---|---|---|---|---|
| 8 | (IA) | 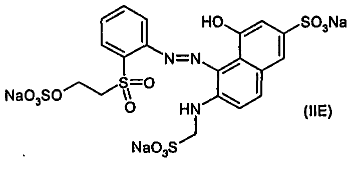 | 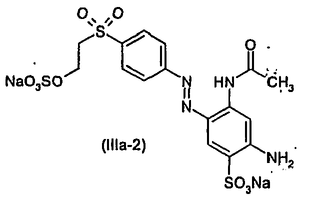 | 67 : 20 : 13 |
| 9 | (IA) | 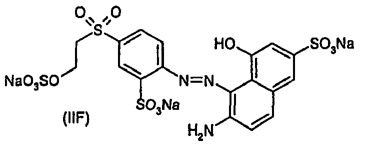 | 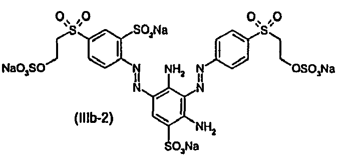 | 70 : 20 : 10 |
| 10 | (IA) | 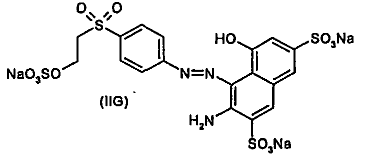 | 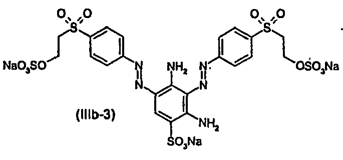 | 72 : 18 : 10 |
| 11 | (IA) | 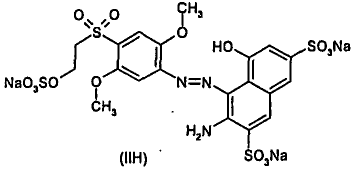 | 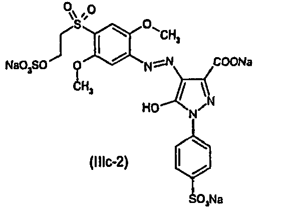 | 67 : 18 : 15 |
| 12 | (IA) | 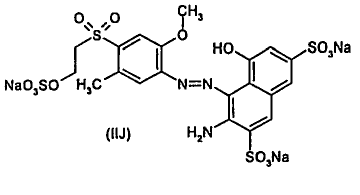 | 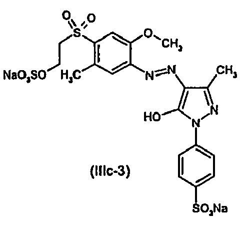 | 66 : 20 : 14 |
| 13 | (IA) | 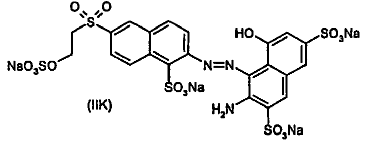 | 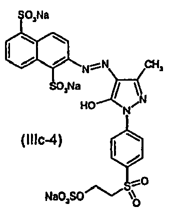 | 70 : 20 : 10 |
| 14 | (IA) | 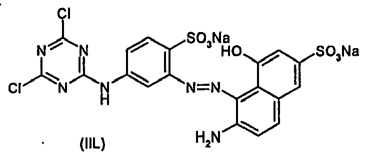 | 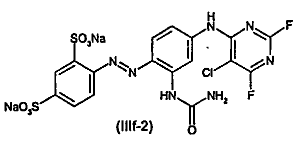 | 75 : 15 : 10 |
| 15 | (IA) | 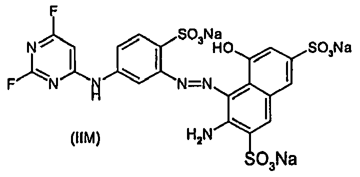 | 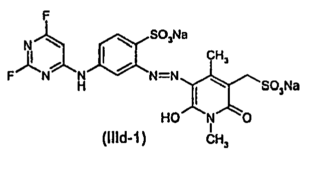 | 70 : 18 : 12 |
| 16 | (IA) | 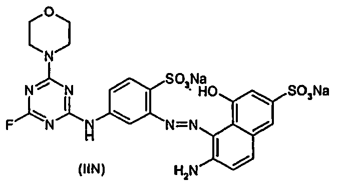 | 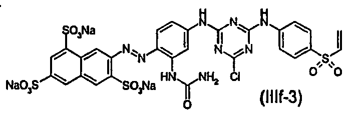 | 65 : 20 : 15 |
| 17 | (IA) | 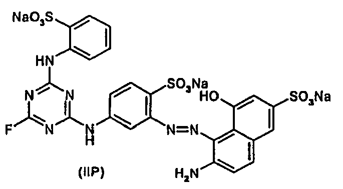 | 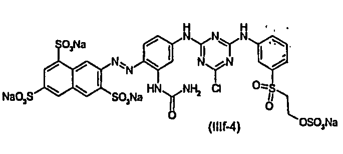 | 66 : 20 : 14 |
| 18 | (IA) | 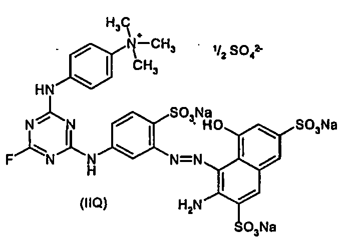 | 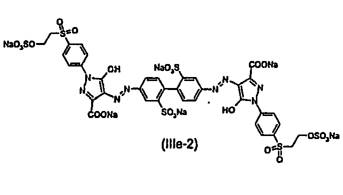 | 68 : 20 : 12 |
| 19 | (IA) | 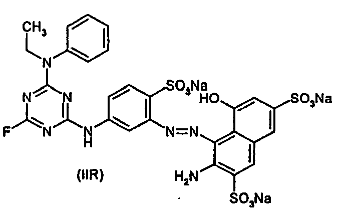 | (IIIf-1) | 70 : 20 : 10 |
| 20 | (IA) | 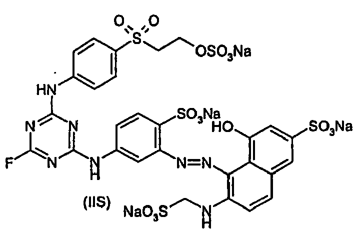 | (IIIf-2) | 75 : 15 : 10 |
| 21 | (IA) | 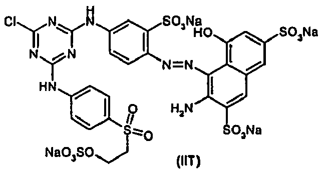 | 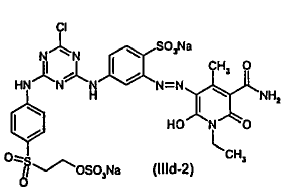 | 65 : 20 : 15 |
| 22 | (IA) | 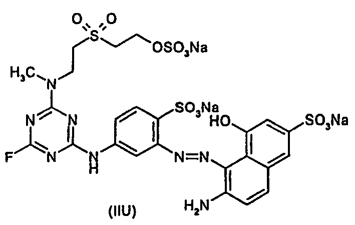 | (IIIf-2) | 68 : 22 : 10 |
| 23 | (IA) | 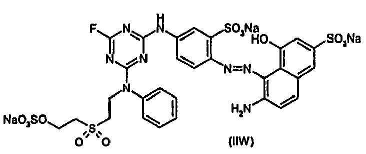 | (IIIf-1) | 70 : 20 : 10 |
| 24 | (IA) | 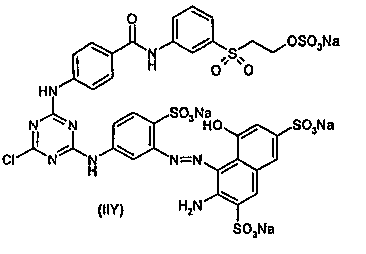 | (IIIc-1) | 72 : 18 : 10 |
| 25 | (IA) | 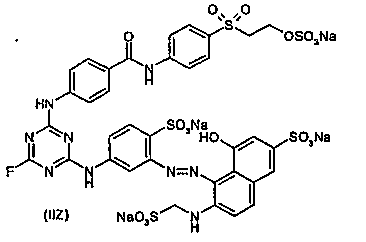 | (IIIb-3) | 75 : 15 : 10 |
| 26 | (IA) | 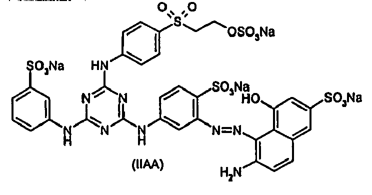 | 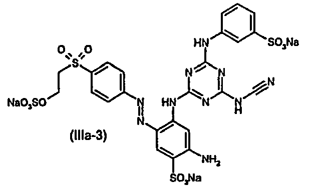 | 70 : 20 : 10 |
| 27 | (IA) | 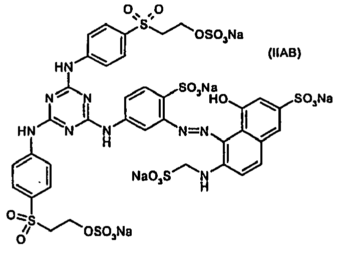 | 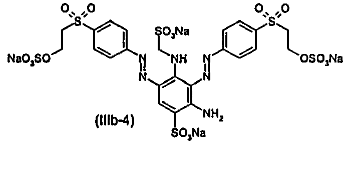 | 77 : 13 : 10 |
| 28 | (IA) | 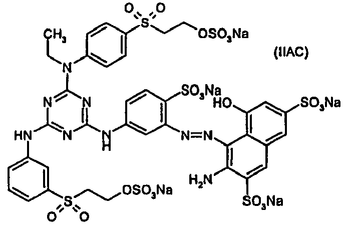 | (IIIe-1) | 73 : 17 : 10 |
| 29 | (IA) | 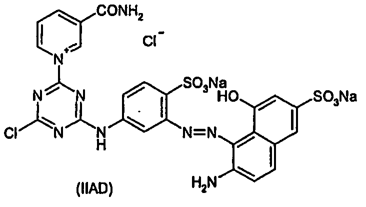 | (IIIa-1) | 68 : 22 : 10 |
| 30 | (IA) | 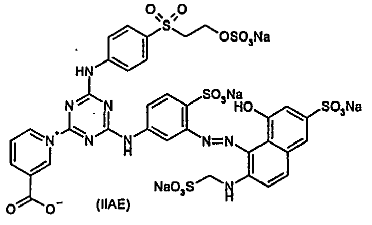 | (IIIb-2) | 70 : 20 : 10 |
| 31 | (IA) | 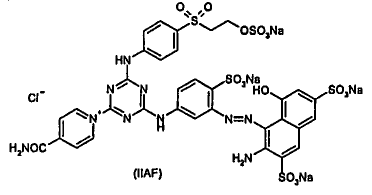 | (IIIb-3) | 72 : 20 : 8 |

### Beispiele 32-57

Wiederholung der Beispiele 1, 2 und 8 - 31 unter Verwendung von Farbstoff (IB) anstelle von Farbstoff (IA).

### Beispiele 58 - 83

Wiederholung der Beispiele 1, 2 und 8 - 31 unter Verwendung von Farbstoff (IC) anstelle von Farbstoff (IA):

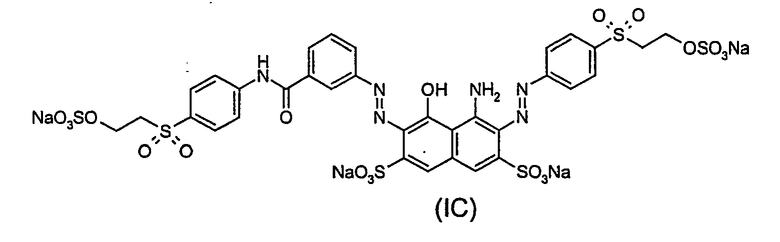

### Beispiele 84 - 109

Wiederholung der Beispiele 1, 2 und 8-31 unter Verwendung von Farbstoff (ID) anstelle von Farbstoff (IA):

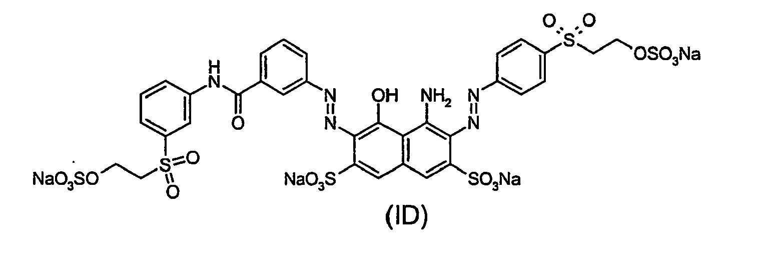

### Beispiele 110 - 135

Wiederholung der Beispiele 1, 2 und 8-31 unter Verwendung von Farbstoff (IE) anstelle von Farbstoff (IA):

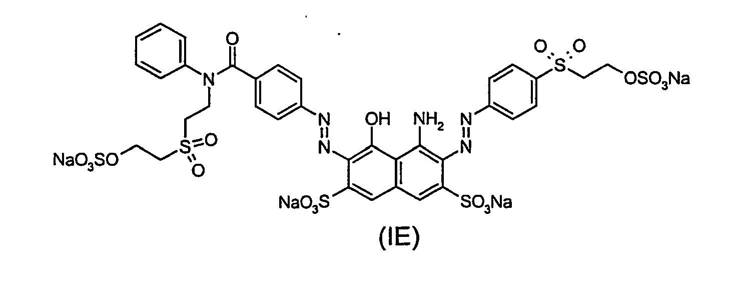

Farbstoff-Mischungen gemäß Beispiel 3

| Beispiel | Farbstoff nach allg. Formel (I) | Farbstoff nach allg. Formel (II) | Farbstoff nach allg. Formel (III) | Verhältnis (I):(II):(III) |
|---|---|---|---|---|
| 136 | (IA) | (IIC) | (IIIf-1) | 75 : 15 : 10 |
| 137 | (IB) | (IIG) | (IIIc-1) | 68 : 22 : 10 |
| 138 | (IC) | (IIC) | (IIIb-2) | 72 : 18 : 10 |
| 139 | (IC) | (IIG) | (IIIe-1) | 70 : 20 : 10 |
| 140 | (ID) | (IIC) | (IIIa-1) | 73 : 16 : 11 |
| 141 | (ID) | (IIG) | (III-1) | 74 : 16 : 10 |
| 142 | (IE) | (IIC) | (IIIb-3) | 75 : 15 : 10 |
| 143 | (IE) | (IIG) | (IIIf-2) | 73 : 17 : 10 |

Farbstoff-Mischungen gemäß Beispiel 4

| Beispiel | Farbstoff nach alig. Formel (I) | Farbstoff nach allg. Formel (II) | Farbstoff nach allg. Formel (III) | Verhältnis (I):(II):(III) |
|---|---|---|---|---|
| 144 | (IA) | 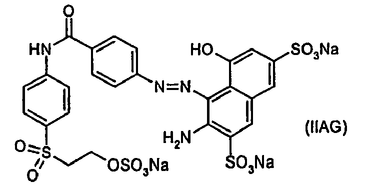 | (IIIb-3) | 72 : 18 : 10 |
| 145 | (IB) | 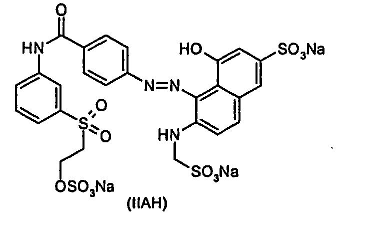 | (IIIc-1) | 72 : 16 : 12 |
| 146 | (IC) | 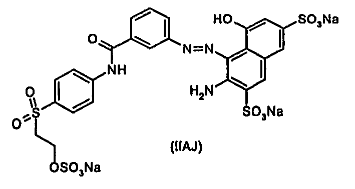 | (IIIa-1) | 70 : 20 : 10 |
| 147 | (ID) | 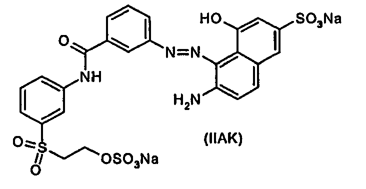 | (IIIf-1) | 73 : 17 : 10 |
| 148 | 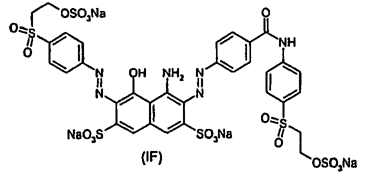 | (IIC) | (IIIf-1) | 72 : 18 : 10 |
| 149 | (IF) | (IIG) | (IIIe-1) | 70 : 20 : 10 |
| 150 | 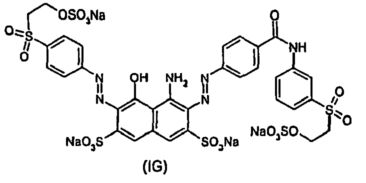 | (IIC) | (IIIb-2) | 71 : 18 : 11 |
| 151 | (IG) | (IIG) | (IIIc-1 ) | 75 : 15 : 10 |
| 152 | 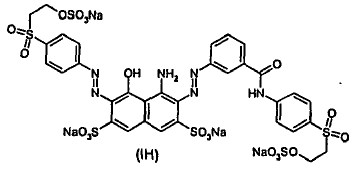 | (IIC) | (IIIb-3) | 73 : 17 : 10 |
| 153 | (IH) | (IIG) | (IIIf-3) | 70 : 18 : 12 |
| 154 | 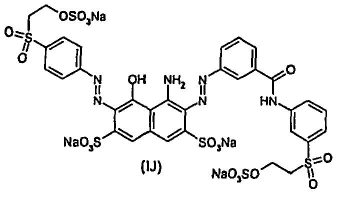 | (IIC) | (IIIa-2) | 76 : 14 : 10 |
| 155 | (lJ) | (IIG) | (IIIf-4) | 70 : 17 : 13 |
| 156 | (IB) | (IIG) | (IIIb-1) | 73 : 17 : 10 |
| 157 | (IF) | (IIAG) | 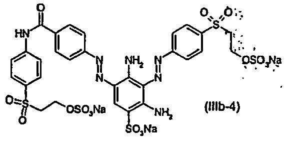 | 75 : 15 : 10 |
| 158 | (IG) | (IID) | 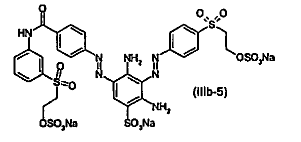 | 72 : 18 : 10 |
| 159 | (IG) | (IIAH) | (IIIb-5) | 70 : 20 : 10 |

### Anwendungsbeispiel 1

2 Teile eines gemäß Beispiel 1-7 erhaltenen Farbstoffs werden in 999 Teilen Wasser gelöst und 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die Temperatur des Färbebades wird zunächst 10 Minuten bei 25°C gehalten, dann in 30 Minuten auf Endtemperatur (40-60°C) erhöht und diese Temperatur weitere 60-90 Minuten gehalten. Danach wird die gefärbte Ware zunächst 2 Minuten mit Trinkwasser und anschließend 5 Minuten mit E-Wasser gespült. Man neutralisiert die gefärbte Ware bei 40°C in 1000 Teilen einer wäßrigen Lösung, die 1 Teil einer 50%igen Essigsäure enthält, während 10 Minuten. Bei 70°C wird mit E-Wasser nachgespült und dann 15 Minuten mit einem Waschmittel kochend geseift, nochmals gespült und getrocknet. Man erhält eine farbstarke marineblaue bis graue Färbung mit sehr guten Echtheitseigenschaften.

### Anwendungsbeispiel 2

4 Teile eines gemäß Beispiel 1-7 erhaltenen Farbstoffs und 5 Teile Natriumchlorid werden in 999 Teilen Wasser gelöst, 5 Teile Natriumcarbonat, 0,7 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine farbstarke marineblaue bis schwarze Färbung mit sehr guten Echtheitseigenschaften.

### Anwendungsbeispiel 3

8 Teile eines gemäß Beispiel 1 - 7 erhaltenen Farbstoffs und 10 Teile Natriumchlorid werden in 997 Teilen Wasser gelöst, 5 Teile Natriumcarbonat, 1,3 Teile Natriumhydroxyd (in Form einer 32,5%-igen wässrigen Lösung) und gegebenenfalls 1 Teil eines Benetzungsmittels zugesetzt. In dieses Färbebad gibt man 100 g eines Baumwollgewebes. Die weitere Bearbeitung erfolgt wie in Anwendungsbeispiel 1 angegeben. Man erhält eine tiefschwarze Färbung mit sehr guten Echtheitseigenschaften.

## Patentansprüche

1. Reaktivfarbstoffmischungen, die einen oder mehrere, wie zwei oder drei Farbstoffe der nachstehend angegebenen und definierten allgemeinen Formel (I), 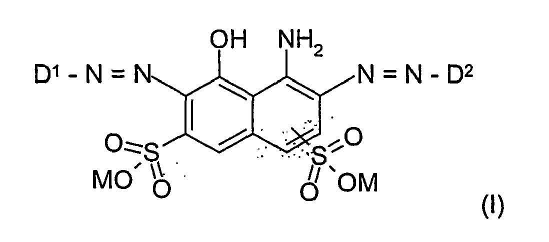 einen oder mehrere, wie zwei oder drei Farbstoffe der nachstehend angegebenen und definierten allgemeinen Formel (II) , 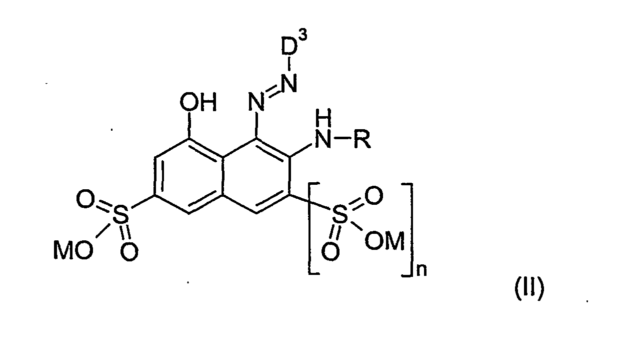 sowie optional einen oder mehrere, wie zwei oder drei Farbstoffe mit beispielsweise den nachstehend angegebenen und definierten allgemeinen Formeln (IIIa) - (IIIf) als weitere Misch- bzw. Nuancierkomponenten enthalten 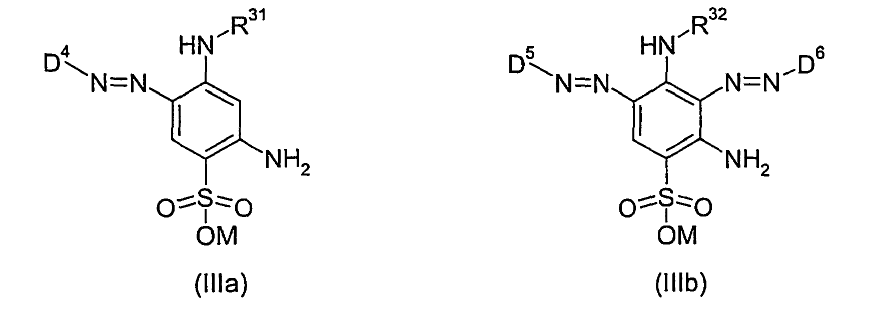 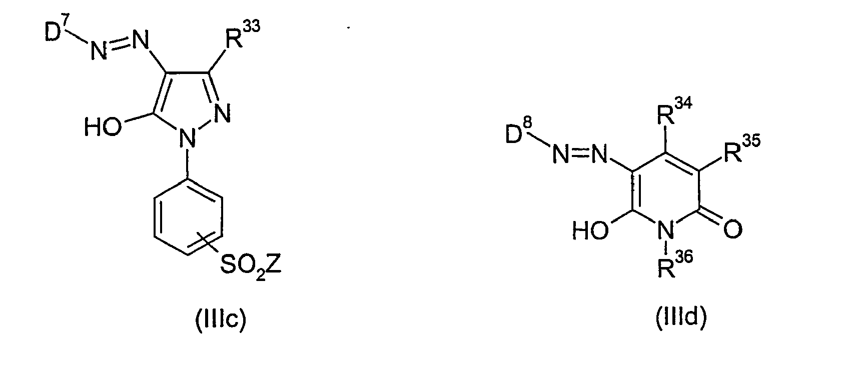 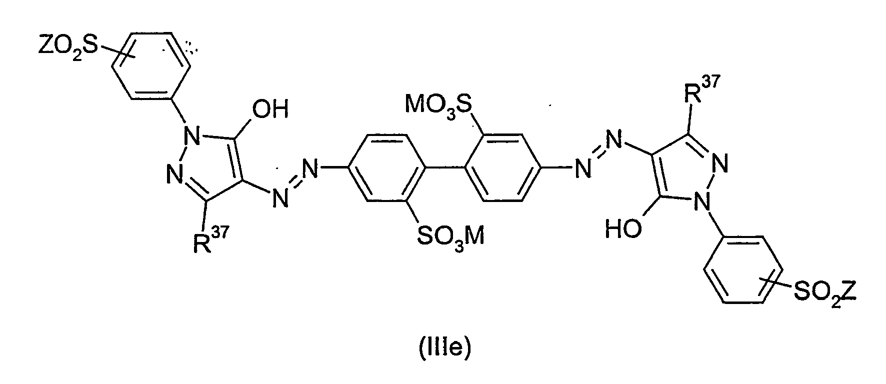 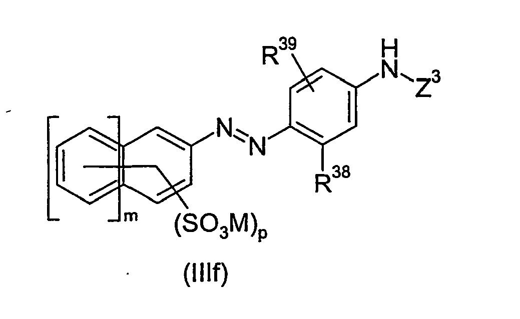 in welchen bedeuten:
D¹ und D² sind eine Gruppe der allgemeinen Formel (1) 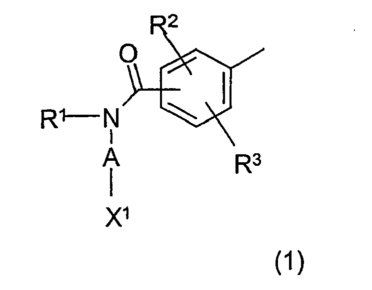 worin
R¹ Wasserstoff, (C₁-C₄)-Alkyl, Aryl oder ein substituierter Arylrest ist;
R² und R³ unabhängig voneinander Wasserstoff, (C₁-C₄)-Alkyl, (C₁-C₄)-Alkoxy, Hydroxy, Sulfo, Carboxy, Amido oder Halogen sind; und
A eine Phenylengruppe der allgemeinen Formel (2) ist 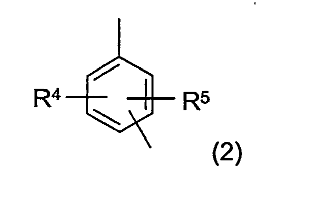 worin
R⁴ und R⁵ unabhängig voneinander Wasserstoff, (C₁-C₄)-Alkyl, (C₁-C₄)-Alkoxy, Hydroxy, Sulfo, Carboxy, Amido oder Halogen bedeuten; oder
eine Naphthylengruppe der allgemeinen Formel (3) 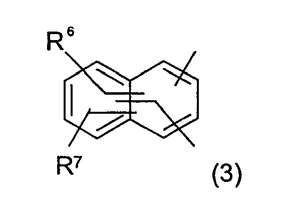 worin
R⁶ und R⁷ unabhängig voneinander Wasserstoff, (C₁-C₄)-Alkyl, (C₁-C₄)-Alkoxy, Hydroxy, Sulfo, Carboxy, Amido oder Halogen bedeuten; oder
eine Polymethylengruppe der allgemeinen Formel (4)
-(CR⁸R⁹)ₖ- (4)
worin
k eine ganze Zahl größer 1 ist und
R⁸ und R⁹ unabhängig voneinander Wasserstoff, (C₁-C₄)-Alkyl, (C₁-C₄)-Alkoxy, Hydroxy, Cyano, Amido, Halogen oder Aryl sind; und
X¹ für Wasserstoff oder eine Gruppe der Formel -SO₂-Z steht; oder
für eine Phenylgruppe der allgemeinen Formel (5) stehen 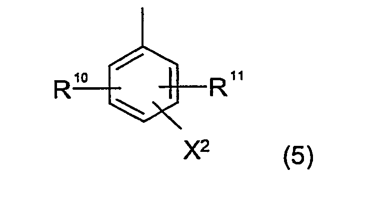 worin
R¹⁰ und R¹¹ unabhängig voneinander Wasserstoff, (C₁-C₄)-Alkyl, (C₁-C₄)-Alkoxy, Hydroxy, Sulfo, Carboxy, Amido oder Halogen sind; und
X² eine der Bedeutungen von X¹ hat;
oder eine Naphthylgruppe der allgemeinen Formel (6) bedeuten 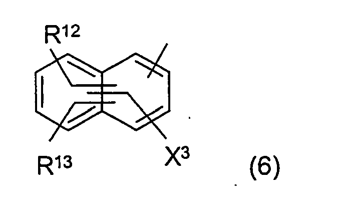 worin
R¹² und R¹³ unabhängig voneinander Wasserstoff, (C₁-C₄)-Alkyl, (C₁-C₄)-Alkoxy, Hydroxy, Sulfo, Carboxy, Amido oder Halogen sind; und
X³ eine der Bedeutungen von X¹ hat;
Z -CH=CH₂, -CH₂CH₂Z¹ oder Hydroxy bedeutet,
worin
Z¹ Hydroxy oder eine unter Alkaliwirkung abspaltbare Gruppe ist; und
M Wasserstoff, ein Alkalimetall oder ein Äquivalent eines Erdalkalimetalls bedeutet;
D³ besitzt eine der Bedeutungen von D¹ oder D² oder steht für eine Gruppe der allgemeinen Formel (7) 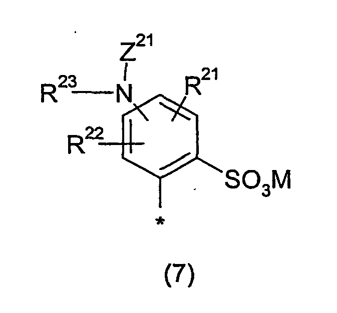 worin
R²¹ und R²² unabhängig voneinander eine der Bedeutungen von R² und R³ haben;
R²³ ist Wasserstoff, (C₁- C₄)-Alkyl, unsubstituiertes oder durch (C₁-C₄)-Alkyl, (C₁-C₄)-Alkoxy, Sulfo, Halogen oder Carboxy substituiertes Phenyl; und
Z²¹ ist eine faserreaktive heterocyclische Gruppe ;
R ist Wasserstoff, (C₁-C₄)-Alkyl oder Phenyl, das unsubstituiert oder durch (C₁-C₄)-Alkyl, (C₁-C₄)-Alkoxy, Sulfo, Halogen, Carboxy, Acetamido, Ureido substituiert ist; oder steht für eine Gruppe der Formel (14)
CH₂- SO₃M (14),
worin M die obengenannten Bedeutungen besitzt; und
n ist 1 oder 2, und worin
D⁴, D⁵, D⁶, D⁷, D⁸ eine der Bedeutungen von D¹, D² oder D³ besitzen, wobei D⁴, wenn R³¹ nicht für eine Gruppe der allgemeinen Formel (8) oder (9) steht, sowie D⁵ oder D⁶ und D⁸ mindestens eine faserreaktive Gruppe der Formel -SO₂Z oder Z²¹ enthalten;
R³¹ Wasserstoff, Acetyl, Carbamoyl, Sulfomethyl ist oder für eine Gruppe der allgemeinen Formel (8) oder (9) steht,
R³² Wasserstoff oder Sulfomethyl ist,
R³³ Methyl, Carboxy oder Carboxyalkyl mit C₁- bis C₄-Alkyl ist,
R³⁴ Wasserstoff oder Methyl ist,
R³⁵ Wasserstoff, Cyano, Carbamoyl, Carboxy oder Sulfomethyl ist,
R³⁶ Methyl, Ethyl oder β-Sulfoethyl ist,
R³⁷ Methyl, Carboxy oder Carboxyalkyl mit C₁- bis C₄- Alkyl ist,
R³⁸ Acetamido, Ureido oder Methyl ist,
R³⁹ Wasserstoff, Methyl oder Methoxy ist,
m 0 oder 1 ist,
p 1, 2 oder 3 ist und
Z³ eine der Bedeutungen von Z²¹ hat, wobei
in der allgemeinen Formel (1) mindestens einer der Reste D¹ und D² für eine Gruppe der allgemeinen Formel (1) steht, und im Falle, daß A für eine Gruppe der allgemeinen Formel (4) steht, R¹ für Aryl oder substituiertes Aryl steht und der Reaktivfarbstoff der allgemeinen Formel (I) mindestens eine -SO₂-Z - Gruppe enthält.

2. Farbstoffmischungen gemäß Anspruch 1, wobei die heterocyclische reaktive Gruppe Z²¹ eine faserreaktive Gruppe der allgemeinen Formel (8) oder (9) oder (10) 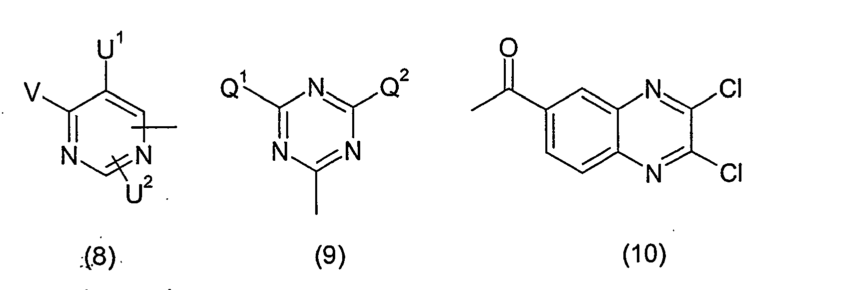 ist, worin
V Fluor oder Chlor bedeutet;
U¹, U² unabhängig voneinander Fluor, Chlor oder Wasserstoff sind; und
Q¹, Q² unabhängig voneinander Chlor, Fluor, Cyanamido, Hydroxy, (C₁-C₆)-Alkoxy, Phenoxy, Sulfophenoxy, Mercapto, (C₁-C₆)-Alkylmercapto, Pyridino, Carboxypyridino, Carbamoylpyridino oder eine Gruppe der allgemeinen Formel (11) oder (12) bedeuten 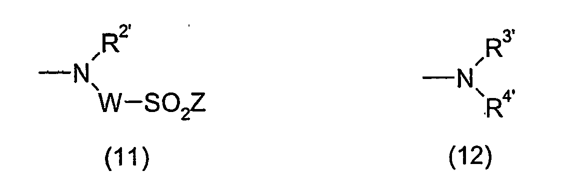 worin
R²' Wasserstoff oder (C₁-C₆)-Alkyl, Sulfo-(C₁-C₆)-Alkyl , oder Phenyl ist, das unsubstituiert oder durch (C₁-C₄)-Alkyl, (C₁-C₄)-Alkoxy, Sulfo, Halogen, Carboxy, Acetamido, Ureido substituiert ist;
R³' und R⁴' unabhängig voneinander eine der Bedeutungen von R²' haben oder ein cyclisches Ringsystem der Formel -(CH₂)ⱼ- bilden, wobei j 4 oder 5 bedeutet, oder alternativ -(CH₂)₂-E-(CH₂)₂-, wobei E Sauerstoff, Schwefel, Sulfo, -NR⁵'- mit R⁵' = (C₁-C₆)-Alkyl ist, oder sie stehen für eine Gruppe der allgemeinen Formel (13) 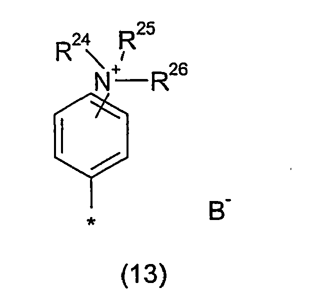 worin
R²⁴, R²⁵ und R²⁶ (C₁-C₄)-Alkyl oder (C₁-C₄)-Hydroxyalkyl sind; und
B⁻ das Äquivalent eines Anions, wie Hydrogensulfat, Sulfat, Fluorid, Chlorid, Bromid, Dihydrogenphosphat, Hydrogenphosphat, Phosphat, Hydroxid oder Acetat ist;
W ist Phenylen, das unsubstituiert oder substituiert ist durch 1 oder 2 Substituenten, wie (C₁-C₄)-Alkyl, (C₁-C₄)-Alkoxy, Carboxy, Sulfo, Chlor, Brom, oder ist (C₁-C₄)-Alkylen-Arylen oder (C₂-C₆)-Alkylen, das unterbrochen sein kann durch Sauerstoff, Schwefel, Sulfo, Amino, Carbonyl, Carbonamido, oder ist Phenylen-CONH-Phenylen, das unsubstituiert oder durch (C₁-C₄)-Alkyl, (C₁-C₄)-Alkoxy, Hydroxy, Sulfo, Carboxy, Amido, Ureido oder Halogen substituiert ist, oder ist Naphthylen, das unsubstituiert oder durch eine oder zwei Sulfogruppen substituiert ist, und
Z die in Anspruch 1 genannte Bedeutung hat;

3. Reaktivfarbstoffmischungen gemäß mindestens einem der Ansprüche 1 oder 2, wobei die Substituenten R¹ bis R⁵, R⁸ bis R¹¹ und R²³ Wasserstoff, R⁶, R⁷, R¹², R¹³, R²¹ und R²² Wasserstoff oder Sulfo und R²⁴, R²⁵ und R²⁶ Methyl bedeuten.

4. Reaktivfarbstoffmischungen gemäß mindestens einem der Ansprüche 1 bis 3, wobei Z Vinyl, β-Chlorethyl oder β-Sulfatoethyl bedeutet.

5. Reaktivfarbstoffmischungen gemäß mindestens einem der Ansprüche 1 bis 4, wobei die Gruppen Q¹ und Q² in der allgemeinen Formel (9) unabhängig voneinander Fluor, Chlor, Cyanamido, Morpholino, 2-Sulfophenylamino, 3-Sulfophenylamino, 4-Sulfophenylamino, 3-Trimethylammoniumphenylamino, 4-Trimethylammoniumphenylamino, 3-(2-Sulfatoethylsulfonyl)-phenylamino, 4-(2-Sulfatoethylsulfonyl)-phenylamino, 3-(Vinylsulfonyl)-phenylamino, 4-(Vinylsulfonyl)-phenylamino, N-Methyl-N-(2-(2-sulfatoethylsulfonyl)-ethyl)-amino oder N-Phenyl-N-(2-(2-sulfatoethylsulfonyl)-ethyl)-amino bedeuten.

6. Reaktivfarbstoffmischungen gemäß einem oder mehreren der Ansprüche 1 bis 5, wobei mindestens ein Farbstoff der allgemeinen Formel (Ia) 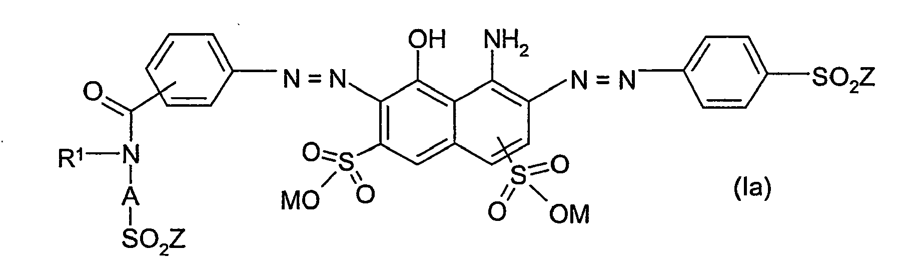 und mindestens ein Farbstoff der allgemeinen Formel (IIa) 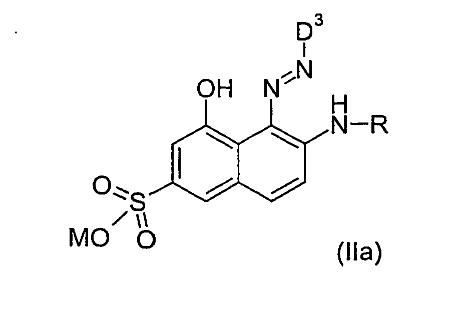 enthalten sind, worin M, A, R¹, Z, D³ und R wie in Anspruch 1 angegeben, definiert sind.

7. Reaktivfarbstoffmischung gemäß Anspruch 6, wobei in Formel (Ia) A Phenylen, Z Vinyl oder β-Sulfatoethyl bedeutet, und in Formel (IIa) R für Wasserstoff oder Sulfomethyl steht und D³ wie in Anspruch 1 angegeben, definiert ist.

8. Reaktivfarbstoffmischungen gemäß einem oder mehreren der Ansprüche 1 bis 7, in denen ein Farbstoff der Formel (I) in einem Anteil von 30 bis 95 Gew.-% und ein Farbstoff der Formel (II) in einem Anteil von 5 bis 70 Gew.-% enthalten ist.

9. Reaktivfarbstoffmischungen gemäß Anspruch 8, in denen zusätzlich mindestens ein Farbstoff der Formeln (IIIa) bis (IIIf) in einem Anteil von 3 bis 50 Gew.-% enthalten ist.

10. Reaktivfarbstoffmischungen gemäß einem oder mehreren der Ansprüche 1 bis 9, die einen oder mehrere Monoazofarbstoffe der Formel (15) und/oder einen oder mehrere Monoazofarbstoffe der Formel (16) mit jeweils 0.5 bis 6 Gew.-% enthalten, 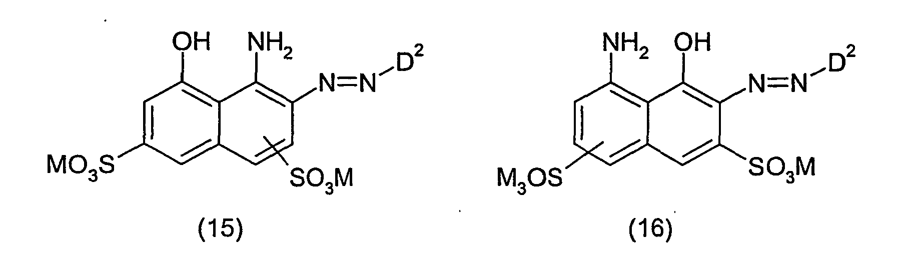 wobei D² und M die in Anspruch 1 angegebenen Bedeutungen besitzen.

11. Reaktivfarbstoffmischungen gemäß einem oder mehreren der Ansprüche 1 bis 10, die mehr als einen marineblauen Disazofarbstoff der allgemeinen Formel (I) in einem Anteil bis zu 95 Gew.-% enthalten.

12. Verfahren zur Herstellung von Farbstoffmischungen gemäß einem oder mehreren der Ansprüche 1 bis 11 **dadurch gekennzeichnet, daß** die Einzelfarbstoffe der Formeln (I) und (II) und gegebenenfalls (III) im vorgegebenen Verhältnis entweder in fester Form mechanisch miteinander vermischt werden oder in Form der wässrigen Lösungen gemischt werden.

13. Ein Verfahren zur Herstellung von Farbstoffmischungen gemäß einem oder mehreren der Ansprüche 1 bis 10, wenn die Diazokomponenten mit den Gruppen D² und D³ gemäß den allgemeinen Formeln (I) und (II) gleiche Bedeutung besitzen, **dadurch gekennzeichnet, daß** man ein Amin der allgemeinen Formel (17)
D² - NH₂ (17),
worin D² wie in Anspruch 1 angegeben definiert ist, in üblicher Weise diazotiert und die erhaltene Diazoniumverbindung anschließend mit einer Mischung aus 4-Amino-5-hydroxy-naphthalin-2,7-disulfonsäure oder 4-Amino-5-Hydroxynaphthalin-1,7-disulfonsäure und einer, gegebenenfalls N-substituierten, 6-Amino-4-hydroxy-naphthalin-2-sulfonsäure oder 3-Amino-5-hydroxy-naphthalin-2,7-disulfonsäure zu den Monoazofarbstoffen der Formeln (15) und (II) umsetzt, und anschließend ein Amin der allgemeinen Formel (18)
D¹ - NH₂ (18),
worin D¹ wie in Anspruch 1 angegeben definiert ist, in üblicher Weise diazotiert und die erhaltene Diazoniumverbindung dann in zweiter Stufe mit der in erster Stufe erhaltenen Mischung der Monoazofarbstoffe der allgemeinen Formeln (15) und (II) zu einer Mischung der Farbstoffe der allgemeinen Formeln (I) und (II) gekuppelt wird.

14. Ein Verfahren zur Herstellung von Farbstoffmischungen gemäß einem oder mehreren der Ansprüche 1 bis 10, wenn die Diazokomponenten mit den Gruppen D¹ und D³ gemäß den allgemeinen Formeln (I) und (II) gleiche Bedeutung besitzen, **dadurch gekennzeichnet, daß** man ein Amin der allgemeinen Formel (18), worin D¹ wie in Anspruch 1 angegeben definiert ist, in üblicher Weise diazotiert und die erhaltene Diazoniumverbindung anschließend mit einer Mischung mit festgelegtem Verhältnis eines roten Monoazofarbstoffs gemäß der allgemeinen Formel (15) und einer, gegebenenfalls N-substituierten, 6-Amino-4-hydroxy-naphthalin-2-sulfonsäure oder 3-Amino-5-hydroxynaphthalin-2,7-disulfonsäure in erster Stufe zu einer Mischung von Monoazofarbstoffen gemäß den allgemeinen Formeln (15) und (II) umsetzt und anschließend die zweite Kupplung des Monoazofarbstoffs der allgemeinen Formel (15) durchgeführt wird, wobei eine Mischung der beiden Farbstoffe der allgemeinen Formeln (I) und (II) entsteht.

15. Wässrige Flüssigpräparation, enthaltend eine Farbstoffmischung gemäß einem oder mehreren der Ansprüche 1 bis 13 mit einem Gesamtfarbstoffgehalt von 5 - 50 Gew.-%.

16. Verwendung von Reaktivfarbstoffmischungen gemäß einem oder mehreren der Ansprüche 1 bis 14 zum Färben und Bedrucken von hydroxy- und/oder carbonamidgruppen-haltigem Fasermaterial.

## Claims

1. A reactive dye mixture comprising one or more, such as two or three dyes of the hereinbelow indicated and defined general formula (I), 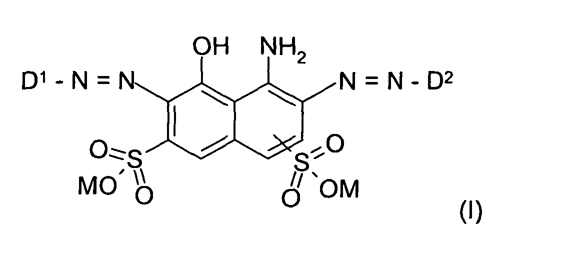 one or more, such as two or three dyes of the hereinbelow indicated and defined general formula (II) 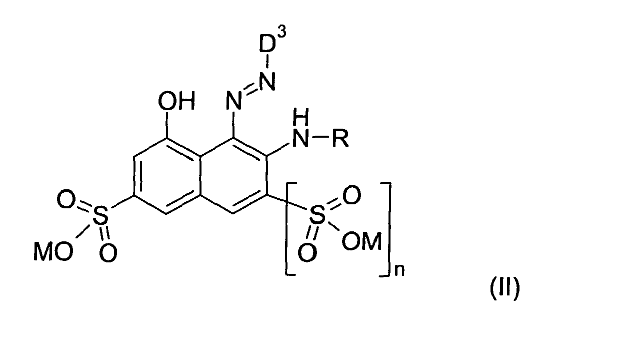 and, optionally, as further components for blending or shading, one or more, such as two or three dyes having, for example, the hereinbelow indicated and defined general formulae (IIIa) - (IIIf) 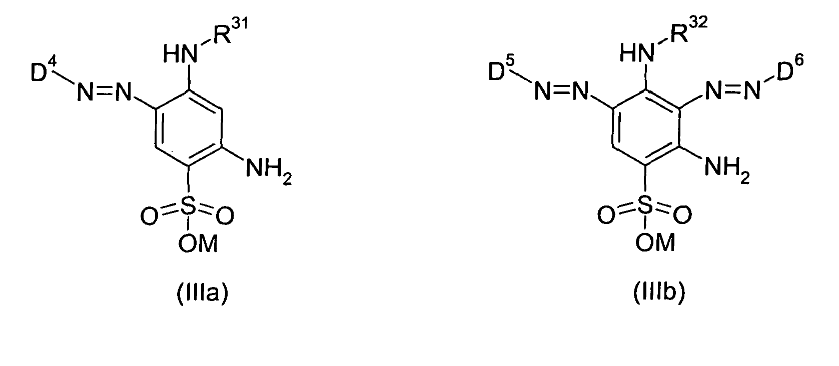 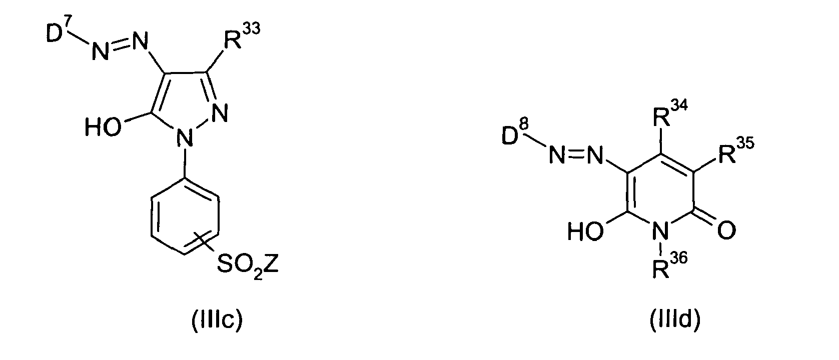 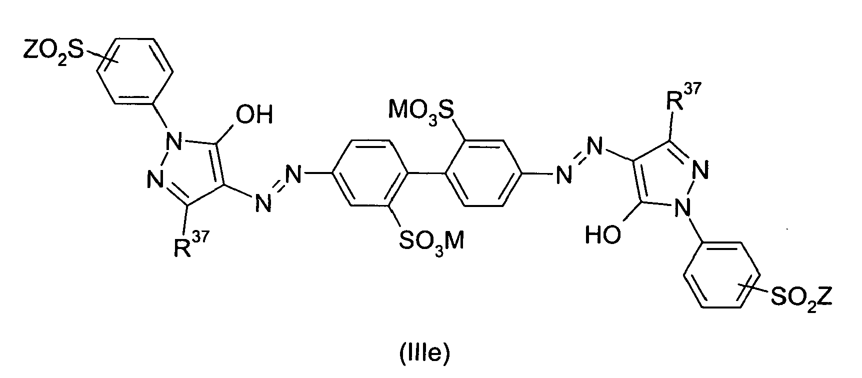 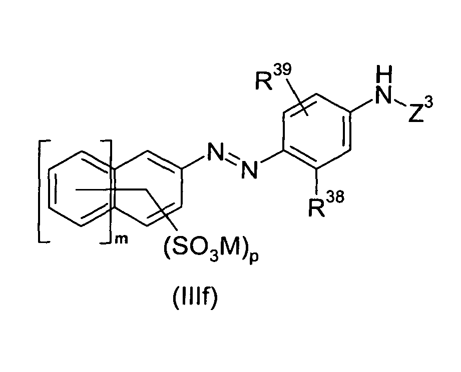 where:
D¹ and D² are each a group of the general formula (1) 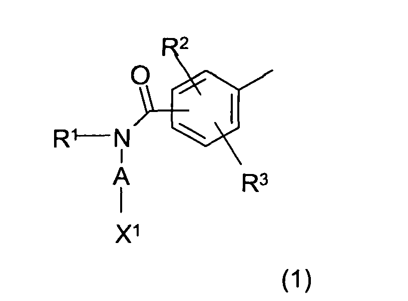 where
R¹ is hydrogen, (C₁-C₄)-alkyl, aryl or a substituted aryl radical;
R² and R³ are independently hydrogen, (C₁-C₄)-alkyl, (C₁-C₄)-alkoxy, hydroxyl, sulfo, carboxyl, amido or halogen; and
A is a phenylene group of the general formula (2) 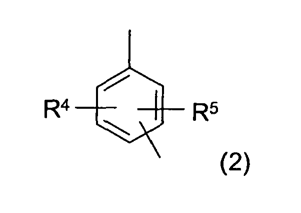 where
R⁴ and R⁵ are independently hydrogen, (C₁-C₄)-alkyl, (C₁-C₄)-alkoxy, hydroxyl, sulfo, carboxyl, amido or halogen; or
a naphthylene group of the general formula (3) 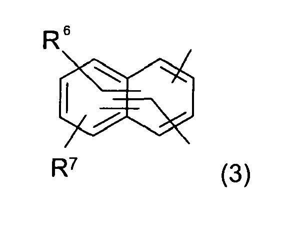 where
R⁶ and R⁷ are independently hydrogen, (C₁-C₄)-alkyl, (C₁-C₄)-alkoxy, hydroxyl, sulfo, carboxyl, amido or halogen; or
a polymethylene group of the general formula (4)
-(CR⁸R⁹)ₖ- (4)
where
k is an integer greater than 1 and
R⁸ and R⁹ are independently hydrogen, (C₁-C₄)-alkyl, (C₁-C₄)-alkoxy, hydroxyl, cyano, amido, halogen or aryl; and
x¹ is hydrogen or a group of the formula -SO₂-Z; or
are each a phenyl group of the general formula (5) 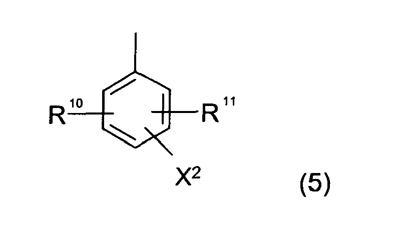 where
R¹⁰ and R¹¹ are independently hydrogen, (C₁-C₄)-alkyl, (C₁-C₄)-alkoxy, hydroxyl, sulfo, carboxyl, amido or halogen; and
X² has one of the meanings of X¹;
or are each a naphthyl group of the general formula (6) 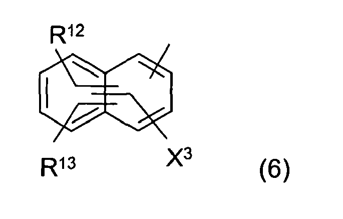 where
R¹² and R¹³ are independently hydrogen, (C₁-C₄)-alkyl, (C₁-C₄)-alkoxy, hydroxyl, sulfo, carboxyl, amido or halogen; and
X³ has one of the meanings of X¹;
Z is -CH=CH₂, -CH₂CH₂Z¹ or hydroxyl,
where
Z¹ is hydroxyl or an alkali-eliminable group; and
M is hydrogen, an alkali metal or one equivalent of an alkaline earth metal;
D³ has one of the meanings of D¹ or D² or is a group of the general formula (7) 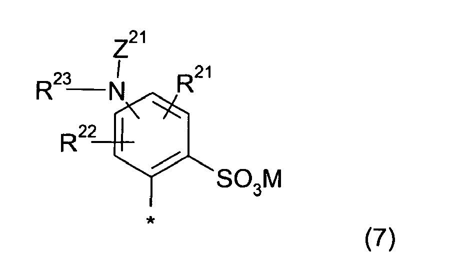 where
R²¹ and R²² independently have one of the meanings of R² and R³;
R²³ is hydrogen, (C₁-C₄)-alkyl, unsubstituted or (C₁-C₄)-alkyl-, (C₁-C₄)-alkoxy-, sulfo-, halogen- or carboxyl-substituted phenyl; and
Z²¹ is a fiber-reactive heterocyclic group;
R is hydrogen, (C₁-C₄)-alkyl or phenyl which is unsubstituted or substituted by (C₁-C₄)-alkyl, (C₁-C₄)-alkoxy, sulfo, halogen, carboxyl, acetamido or ureido; or
is a group of the formula (14)
CH₂- SO₃M (14),
where M is as defined above; and
n is 1 or 2, and where
D⁴ D⁵, D⁶, D⁷ and D⁸ have one of the meanings of D¹, D² or D³, where, if R³¹ is not a group of the general formula (8) or (9), D⁴, and also D⁵ or D⁶ and D⁸, contain at least one fiber-reactive group of the formula -SO₂Z or Z²¹;
R³¹ is hydrogen, acetyl, carbamoyl, sulfomethyl or a group of the general formula (8) or (9),
R³² is hydrogen or sulfomethyl,
R³³ is methyl, carboxyl or carboxyalkyl with C₁- to C₄-alkyl,
R³⁴ is hydrogen or methyl,
R³⁵ is hydrogen, cyano, carbamoyl, carboxyl or sulfomethyl,
R³⁶ is methyl, ethyl or β-sulfoethyl,
R³⁷ is methyl, carboxyl or carboxyalkyl with C₁- to C₄-alkyl,
R³⁸ is acetamido, ureido or methyl,
R³⁹ is hydrogen, methyl or methoxy,
m is 0 or 1,
p is 1, 2 or 3, and
Z³ has one of the meanings of Z²¹, where
in the general formula (I) at least one of D¹ and D² is a group of the general formula (1) and in the case where A is a group of the general formula (4), R¹ is aryl or substituted aryl and the reactive dye of the general formula (I) contains at least one -SO₂-Z group.

2. The dye mixture as claimed in claim 1 wherein the heterocyclic reactive group Z²¹ is a fiber-reactive group of the general formula (8) or (9) or (10) 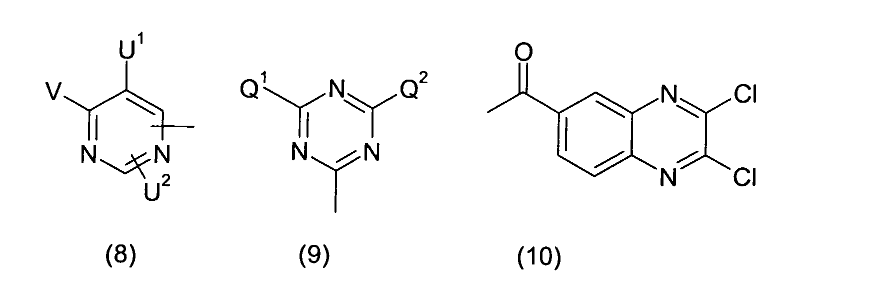 where
V is fluorine or chlorine;
U¹, U² are independently fluorine, chlorine or hydrogen; and
Q¹, Q² are independently chlorine, fluorine, cyanamido, hydroxyl, (C₁-C₆)-alkoxy, phenoxy, sulfophenoxy, mercapto, (C₁-C₆)-alkylmercapto, pyridino, carboxypyridino, carbamoylpyridino or a group of the general formula (11) or (12) 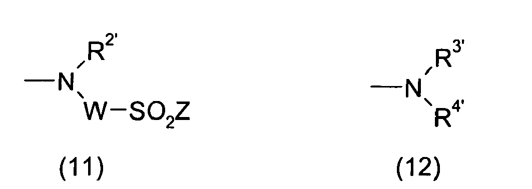 where
R²' is hydrogen or (C₁-C₆)-alkyl, sulfo-(C₁-C₆)-alkyl, or phenyl which is unsubstituted or substituted by (C₁-C₄)-alkyl, (C₁-C₄)-alkoxy, sulfo, halogen, carboxyl, acetamido or ureido;
R³' and R⁴' independently have one of the meanings of R²', or combine to form a cyclic ring system of the formula -(CN₂)ⱼ- , where j is 4 or 5, or alternatively -(CH₂)₂-E-(CH₂)₂-, where E is oxygen, sulfur, sulfo, -NR⁵'-, where R⁵' is equal to (C₁-C₆)-alkyl, or they are a group of the general formula (13) 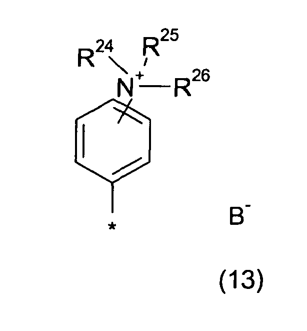 where
R²⁴, R²⁵ and R²⁶ are each (C₁-C₄)-alkyl or (C₁-C₄)-hydroxyalkyl; and
B⁻ is the equivalent of an anion, such as hydrogensulfate, sulfate, fluoride, chloride, bromide, dihydrogenphosphate, hydrogenphosphate, phosphate, hydroxide or acetate;
W is phenylene which is unsubstituted or substituted by 1 or 2 substituents, such as (C₁-C₄)-alkyl, (C₁-C₄)-alkoxy, carboxyl, sulfo, chlorine, bromine, or is (C₁-C₄)-alkylene-arylene or (C₂-C₆)-alkylene, which can be interrupted by oxygen, sulfur, sulfo, amino, carbonyl, carboxamido, or is phenylene-CONH-phenylene, which is unsubstituted or substituted by (C₁-C₄)-alkyl, (C₁-C₄)-alkoxy, hydroxyl, sulfo, carboxyl, amido, ureido or halogen, or is naphthylene, which is unsubstituted or substituted by one or two sulfo groups, and
Z is as defined in claim 1.

3. The reactive dye mixture as claimed in one or both of claims 1 and 2, wherein the substituents R¹ to R⁵ , R⁸ to R¹¹ and R²³ are each hydrogen, R⁶, R⁷, R¹², R¹³, R²¹ and R²² are each hydrogen or sulfo and R²⁴, R²⁵ and R²⁶ are each methyl.

4. The reactive dye mixture as claimed in at least one of claims 1 to 3 wherein Z is vinyl, β-chloroethyl or ß-sulfatoethyl.

5. The reactive dye mixture as claimed in at least one of claims 1 to 4 wherein the groups Q¹ and Q² in the general formula (9) independently of one another are fluorine, chlorine, cyanamido, morpholino, 2-sulfophenylamino, 3-sulfophenylamino, 4-sulfophenylamino, 3-trimethylammoniumphenylamino, 4-trimethylammoniumphenylamino, 3-(2-sulfatoethylsulfonyl)phenylamino, 4-(2-sulfatoethylsulfonyl)phenylamino, 3-(vinylsulfonyl)phenylamino, 4-(vinylsulfonyl)phenylamino, N-methyl-N-(2-(2-sulfatoethylsulfonyl)ethyl)amino or N-phenyl-N-(2-(2-sulfatoethylsulfonyl)ethyl)amino.

6. The reactive dye mixture as claimed in one or more of claims 1 to 5 comprising at least one dye of the general formula (1a) 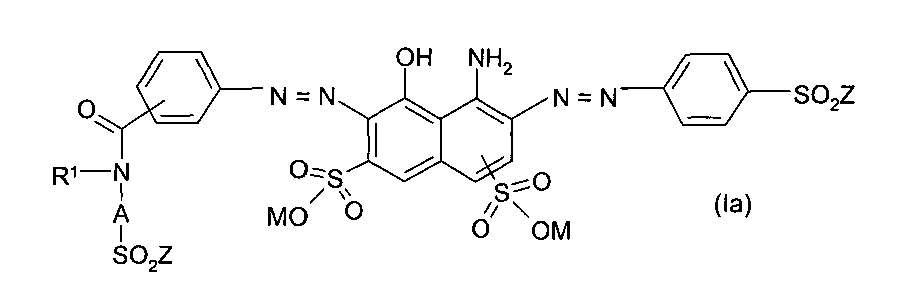 and at least one dye of the general formula (IIa) 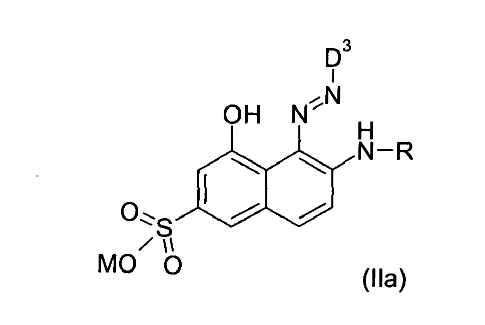 where M, A, R¹, Z, D³ and R are each as defined in claim 1.

7. The reactive dye mixture as claimed in claim 6 wherein, in formula (1a), A is phenylene and Z is vinyl or β-sulfatoethyl and, in formula (IIa), R is hydrogen or sulfomethyl and D³ is as defined in claim 1.

8. The reactive dye mixture as claimed in one or more of claims 1 to 7 comprising a dye of the formula (I) in a fraction of 30 to 95% by weight and a dye of the formula (II) in a fraction of 5 to 70% by weight.

9. The reactive dye mixture as claimed in claim 8, further comprising at least one dye of the formulae (IIIa) to (IIIf) in a fraction of 3 to 50% by weight.

10. The reactive dye mixture as claimed in one or more of claims 1 to 9 comprising one or more monoazo dyes of the formula (15) and/or one or more monoazo dyes of the formula (16) each at 0.5 to 6% by weight 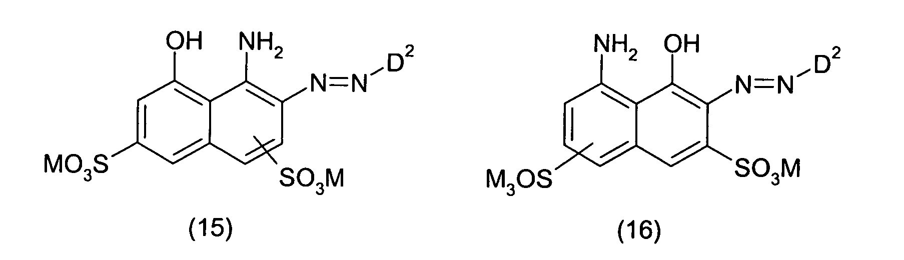 where D² and M are each as defined in claim 1.

11. The reactive dye mixture as claimed in one or more of claims 1 to 10 comprising more than one navy disazo dye of the general formula (I) in a fraction of up to 95% by weight.

12. A process for producing dye mixtures as claimed in one or more of claims 1 to 11, which comprises the individual dyes of the formulae (I) and (II) and, if used, (III) being mixed with each other in the required proportions either mechanically in solid form or in the form of the aqueous solutions.

13. A process for producing dye mixtures as claimed in one or more of claims 1 to 10 where the diazo components with the groups D² and D³ in the general formulae (I) and (II) are the same, which comprises diazotizing an amine of the general formula (17)
D² - NH₂ (17),
where D² is as defined in claim 1, in a conventional manner and then reacting the resulting diazonium compound with a mixture of 4-amino-5-hydroxynaphthalene-2,7-disulfonic acid or 4-amino-5-hydroxynaphthalene-1,7-disulfonic acid and an optionally N-substituted 6-amino-4-hydroxynaphthalene-2-sulfonic acid or 3-amino-5-hydroxynaphthalene-2,7-disulfonic acid to give the monoazo dyes of the formulae (15) and (II) and then diazotizing an amine of the general formula (18)
D¹ - NH₂ (18),
where D¹ is as defined in claim 1, in a conventional manner and then coupling the resulting diazonium compound in a second stage with the mixture of the monoazo dyes of the general formulae (15) and (II) obtained in the first stage to give a mixture of the dyes of the general formulae (I) and (II).

14. A process for producing dye mixtures as claimed in one or more of claims 1 to 10, where the diazo components with the groups D¹ and D³ in the general formulae (I) and (II) are the same, which comprises diazotizing an amine of the general formula (18), where D¹ is as defined in claim 1, in a conventional manner and then reacting the resulting diazonium compound with a mixure of defined proportion of a red monoazo dye of the general formula (15) and an optionally N-substituted 6-amino-4-hydroxynaphthalene-2-sulfonic acid or 3-amino-5-hydroxynaphthalene-2,7-disulfonic acid in a first stage to give a mixture of monoazo dyes of the general formulae (15) and (II) and then carrying out the second coupling of the monoazo dye of the general formula (15) to give a mixture of the two dyes of the general formulae (I) and (II).

15. An aqueous liquid preparation comprising a dye mixture as claimed in one or more of claims 1 to 13 with a total dye content of 5 - 50% by weight.

16. The use of reactive dye mixtures of one or more of claims 1 to 14 for dyeing and printing hydroxyl- and/or carboxamido-containing fiber material.

## Revendications

1. Mélanges de colorants réactifs qui contiennent un ou plusieurs, par exemple deux au trois, colorants de la formule générale (I) indiquée et définie dans la suite, 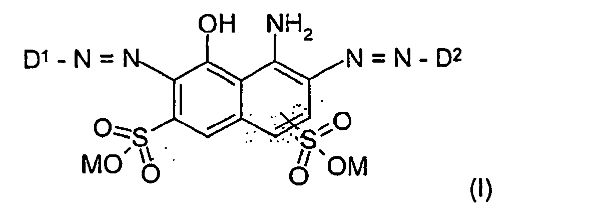 un ou plusieurs, par exemple deux au trois, colorants de la formule générale (II) indiquée et définie dans la suite, 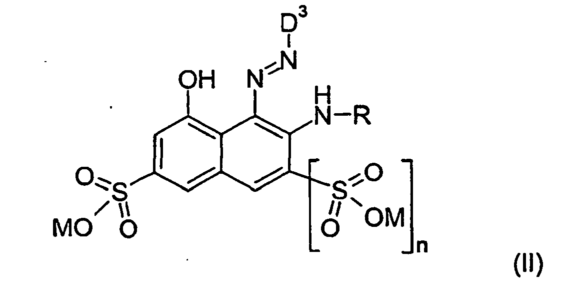 ainsi qu'éventuellement un ou plusieurs, par exemple deux au trois, colorants présentant par exemple les formules générales (IIIa)-(IIIf) indiquées et définies dans la suite comme autres composants de mélange et de nuance 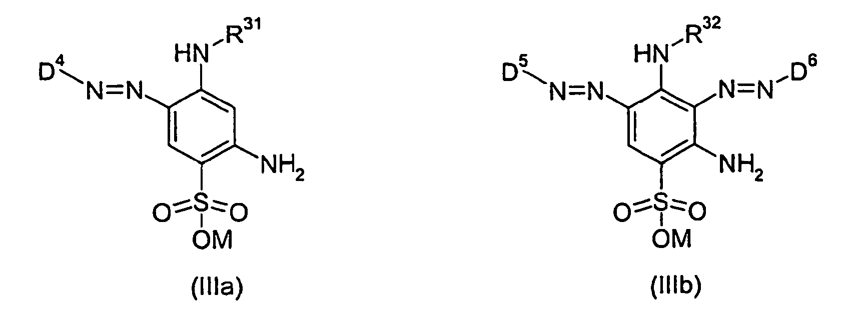 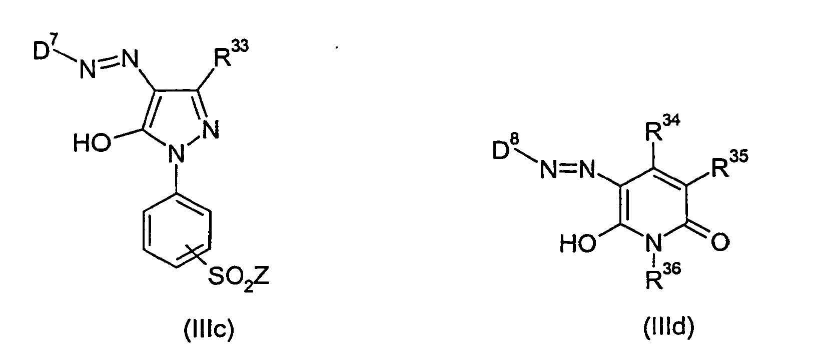 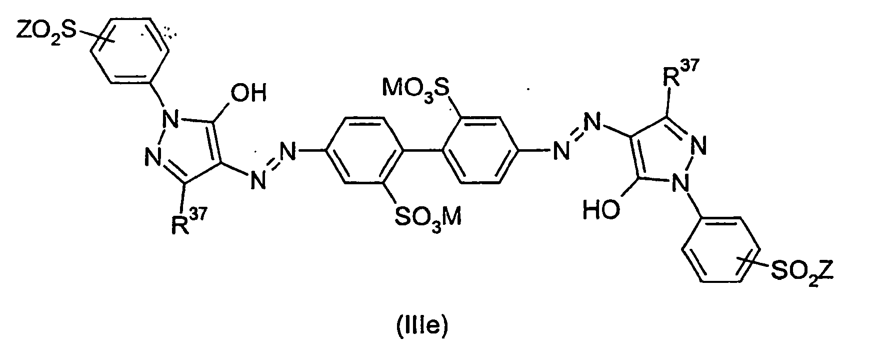 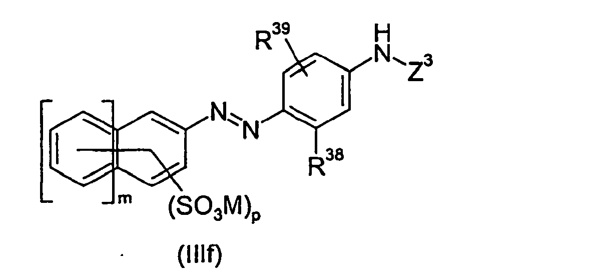 où
D¹ et D² représentent un groupe de formule générale (1) 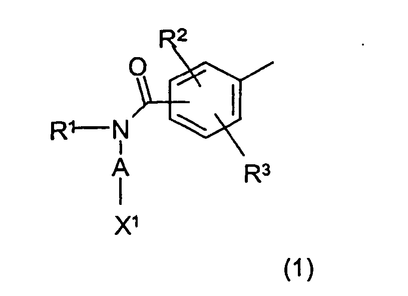 où
R¹ représente hydrogène, un radical (C₁-C₄)-alkyle, aryle ou aryle substitué ;
R² et R³ représentent, indépendamment l'un de l'autre, hydrogène, (C₁-C₄) -alkyle, (C₁-C₄) -alcoxy, hydroxy, sulfo, carboxy, amido ou halogène ; et
A représente un groupe phénylène de formule générale (2) 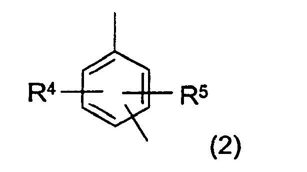 où
R⁴ et R⁵ signifient, indépendamment l'un de l'autre, hydrogène, (C₁-C₄) -alkyle, (C₁-C₄)-alcoxy, hydroxy, sulfo, carboxy, amido ou halogène ; ou
un groupe naphtylène de formule générale (3) 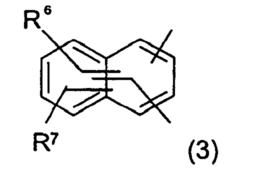 où
R⁶ et R⁷ signifient, indépendamment l'un de l'autre, hydrogène, (C₁-C₄)-alkyle, (C₁-C₄)-alcoxy, hydroxy, sulfo, carboxy, amido ou halogène ; ou
un groupe polyméthylène de formule générale (4)
-(CR⁸R⁹) ₖ- (4)
où
k est un nombre entier supérieur à 1 et
R⁸ et R⁹ représentent, indépendamment l'un de l'autre, hydrogène, (C₁-C₄)-alkyle, (C₁-C₄)-alcoxy, hydroxy, cyano, amido, halogène ou aryle ; et
X¹ représente hydrogène ou un groupe de formule -SO₂-Z ; ou
représentent un groupe phényle de formule générale (5) 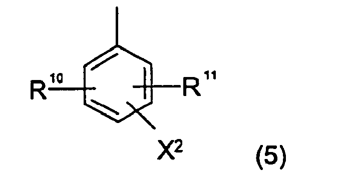
où
R¹⁰ et R¹¹ représentent, indépendamment l'un de l'autre, hydrogène, (C₁-C₄) -alkyle, (C₁-C₄) -alcoxy, hydroxy, sulfo, carboxy, amido ou halogène ; et
X² présente une des significations de X¹ ;
ou signifient un groupe naphtyle de formule générale (6) 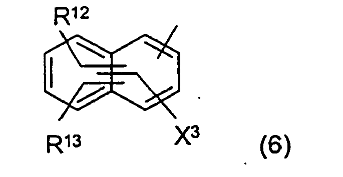 où
R¹² et R¹³ représentent, indépendamment l'un de l'autre, hydrogène, (C₁-C₉) -alkyle, (C₁-C₉) -alcoxy, hydroxy, sulfo, carboxy, amido ou halogène ; et
X³ présente une des significations de X¹ ;
Z signifie -CH=CH₂, -CH₂CH₂Z¹ ou hydroxy,
où
Z¹ représente hydroxy ou un groupe pouvant être dissocié sous l'effet d'alcalis ; et
M signifie hydrogène, un métal alcalin ou un équivalent d'un métal alcalino-terreux ;
D³ présente une des significations de D¹ ou D² ou représente un groupe de formule générale (7) 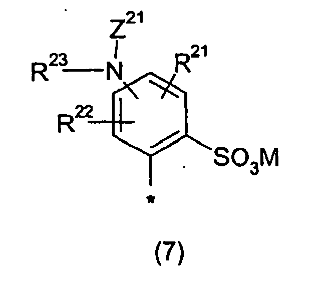 où
R²¹ et R²² présentent, indépendamment l'un de l'autre, une des significations de R² et R³ ;
R²³ représente hydrogène, (C₁-C₄)-alkyle, phényle non substitué ou substitué par (C₁-C₄)-alkyle, (C₁-C₄) -alcoxy, sulfo, halogène ou carboxy ; et
R²³ x représente un groupe hétérocyclique réactif avec des fibres ;
R représente hydrogène, (C₁-C₄)-alkyle ou phényle qui est non substitué ou substitué par (C₁-C₄)-alkyle, (C₁-C₄)-alcoxy, sulfo, halogène, carboxy, acétamido, uréido ; ou
représente un groupe de formule (14)
CH₂-SO₃M (14),
où M a les significations susmentionnées ; et
n vaut 1 ou 2, et où
D⁴,D⁵, D⁶, D⁷, D⁸ présentent une des significations de D¹, D² ,ou D³ ,où D⁴ ,lorsque R³¹ ne représente pas un groupe des formules générales (8) ou (9), ainsi que D⁵ ou D⁶ et D⁸ contiennent au moins un groupe réactif avec des fibres de formule -SO₂Z ou Z²¹;
R³¹ représente hydrogène, acétyle, carbamoyle, sulfométhyle ou représente un groupe des formules générales (8) ou (9),
R³² représente hydrogène ou sulfométhyle,
R³³ représente méthyle, carboxy ou carboxyalkyle avec un groupe C₁ à C₄-alkyle,
R³⁴ représente hydrogène ou méthyle,
R³⁵ représente hydrogène, cyano, carbamoyle, carboxy ou sulfométhyle,
R³⁶ représente méthyle, éthyle ou ß-sulfoéthyle,
R³⁷ représente méthyle, carboxy ou carboxyalkyle avec un groupe C₁ à C₄-alkyle,
R³⁸ représente acétamido, uréido ou méthyle,
R³⁹ représente hydrogène, méthyle ou méthoxy
m vaut 0 ou 1,
p vaut 1, 2 ou 3 et
Z³ présente une des significations de Z²¹, où dans la formule générale (I) au moins un des radicaux D¹ et D² représente un groupe de formule générale (1), et dans le cas où A représenterait un groupe de formule générale (4), R¹ représente aryle ou aryle substitué et le colorant réactif de formule générale (I) contient au moins un groupe -SO₂-Z .

2. Mélanges de colorants selon la revendication 1, où le groupe réactif hétérocyclique Z²¹ représente un groupe réactif avec des fibres de formule générale (8) ou (9) ou (10) 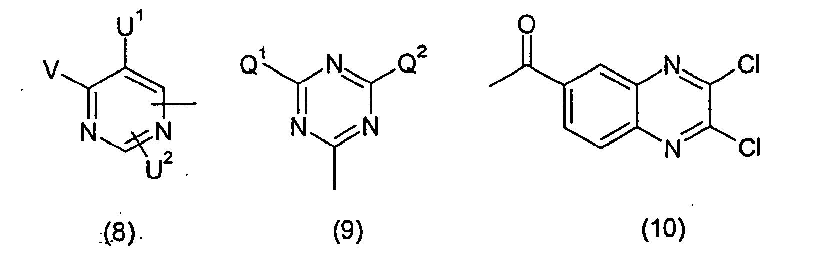 où
V signifie fluor ou chlore ;
U¹, U² représentent, indépendamment l'un de l'autre fluor, chlore ou hydrogène ; et
Q¹, Q² signifient indépendamment l'un de l'autre chlore, fluor, cyanamido, hydroxy, (C₁-C₆)-alcoxy, phénoxy, sulfophénoxy, mercapto, (C₁-C₆)-alkylmercapto, pyridino, carboxypyridino, carbamoylpyridino ou un groupe de formule générale (11) ou (12) 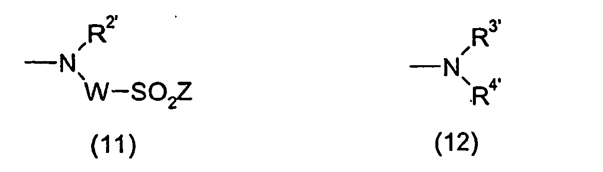 où
R²' représente hydrogène ou (C₁-C₆)-alkyle, sulfo-(C₁-C₆)-alkyle ou phényle qui est non substitué ou substitué par (C₁-C₄)-alkyle, (C₁-C₄) -alcoxy, sulfo, halogène, carboxy, acétamido, uréido ;
R³' et R⁴' présentent, indépendamment l'un de l'autre, une des significations de R²' ou forment un système cyclique de formule -(CH₂)ⱼ-, où j vaut 4 ou 5, ou en variante-(CH₂) ₂-E- (CH₂) ₂-, où E représente oxygène, soufre, sulfo, -NR⁵' - avec R⁵' = (C₁-C₆)-alkyle, ou ils représentent un groupe de formule générale (13) 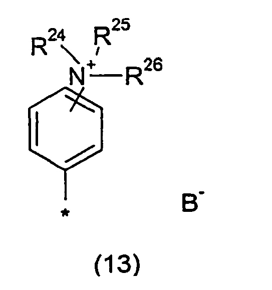 où
R²⁴, R²⁵ et R²⁶ représentent (C₁-C₄) -alkyle ou (C₁-C₄)-hydroxyalkyle ; et
B⁻ représente l'équivalent d'un anion, tel qu'un anion hydrogénosulfate, sulfate, fluorure, chlorure, bromure, dihydrogénophosphate, hydrogénophosphate, phosphate, hydroxyde ou acétate ;
W représente phénylène, qui est non substitué ou substitué par 1 ou 2 substituants, tels que (C₁-C₄)-alkyle,
(C₁-C₄) -alcoxy, carboxy, sulfo, chlore, brome, ou représente (C₁-C₄)-alkylène-arylène ou (C₂-C₆)-alkylène, qui peut être interrompu par oxygène, soufre, sulfo, amino, carbonyle, carboxamido, ou représente phénylène-CONH-phénylène, qui est non substitué ou substitué par (C₁-C₄)-alkyle, (C₁-C₄)-alcoxy, hydroxy, sulfo, carboxy, amido, uréido ou halogène, ou représente naphtylène, qui est non substitué ou substitué par un ou deux groupes sulfo, et
Z a la signification mentionnée dans la revendication 1 ;

3. Mélanges de colorants réactifs selon au moins l'une quelconque des revendications 1 ou 2, où les substituants R¹ à R⁵, R⁸ à R¹¹ et R²³ représentent hydrogène, R⁶ R⁷ R¹² R¹³, R²¹ et R²² représentent hydrogène ou sulfo et R ²⁴ R²⁵ et R²⁶ représentent méthyle.

4. Mélanges de colorants réactifs selon au moins l'une quelconque des revendications 1 à 3, où Z représente vinyle, ß-chloroéthyle ou ß-sulfatoéthyle.

5. Mélanges de colorants réactifs selon au moins l'une quelconque des revendications 1 à 4, où les groupes Q¹ et Q² dans la formule générale (9) signifient, indépendamment l'un de l'autre, fluor, chlore, cyanamido, morpholino, 2-sulfophénylamino, 3-sulfophénylamino, 4-sulfophénylamino, 3-triméthylammoniumphénylamino, 4-triméthylammoniumphénylamino,
3-(2-sulfatoéthylsulfonyl)-phénylamino, 4-(2-sulfatoéthylsulfonyl)-phénylamino, 3(vinylsulfonyl)-phénylamino, 4-(vinylsulfonyl)-phénylamino, N-méthyl-N-(2-(2-sulfatoéthylsulfonyl)-éthyl)-amino ou N-phényl-N-(2-(2-sulfatoéthylsulfonyl)-éthyl)-amino.

6. Mélanges de colorants réactifs selon l'une ou plusieurs des revendications 1 à 5, contenant au moins un colorant de formule générale (Ia) 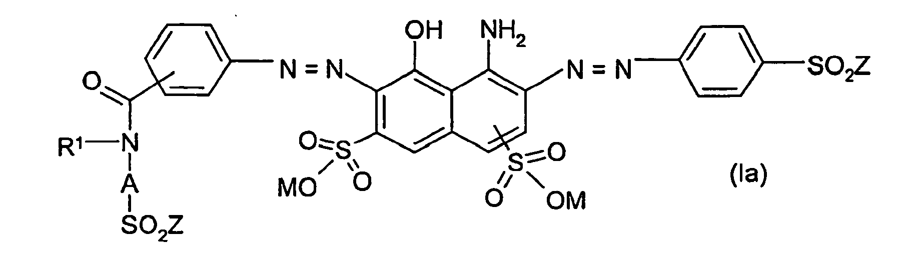 et au moins un colorant de formule générale (IIa). 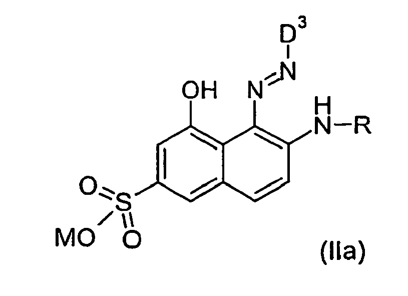 M, A, R¹, Z, D³ et R étant définis comme indiqué dans la revendication 1.

7. Mélange de colorants réactifs selon la revendication 6, où, dans la formule (Ia) A représente phénylène, Z représente vinyle ou β-sulfatoéthyle, et, dans la formule (IIa) R représente hydrogène ou sulfométhyle et D³ est défini comme indiqué dans la revendication 1.

8. Mélanges de colorants réactifs selon l'une ou plusieurs des revendications 1 à 7, dans lesquels un colorant de formule (I) est contenu en une proportion de 30 à 95% en poids et un colorant de formule (II) est contenu en une proportion de 5 à 70% en poids.

9. Mélanges de colorants réactifs selon la revendication 8, dans lesquels est en outre contenu au moins un colorant des formules (IIIa) à (IIIf) en une proportion de 3 à 50% en poids.

10. Mélanges de colorants réactifs selon l'une ou plusieurs des revendications 1 à 9, qui contiennent un
ou plusieurs colorants de type monoazo de formule (15) et/ou un ou plusieurs colorants de type monoazo de formule (16) à chaque fois à raison de 0,5 à 6% en poids, 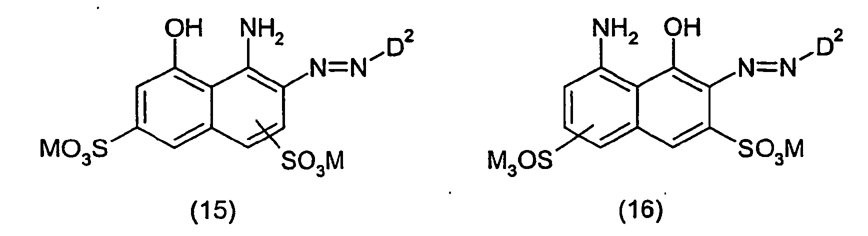 D² et M ayant les significations indiquées dans la revendication 1.

11. Mélanges de colorants réactifs selon l'une ou plusieurs des revendications 1 à 10, qui contiennent plus d'un colorant de type diazo bleu marine de formule générale (I) en une proportion jusqu'à 95% en poids.

12. Procédé pour la préparation de mélanges de colorants selon l'une ou plusieurs des revendications 1 à 11, **caractérisé en ce que** les différents colorants des formules (I) et (II) et le cas échéant (III), dans un rapport prédéfini, soit sont mélangés l'un avec l'autre mécaniquement sous forme solide soit sont mélangés sous forme des solutions aqueuses.

13. Procédé pour la préparation de mélanges de colorants selon l'une ou plusieurs des revendications 1 à 10, lorsque les composants diazo avec les groupes D² et D³ selon les formules générales (I) et (II) présentent la même signification, **caractérisé en ce qu'**on diazote une amine de formule générale (17)
D²-NH₂ (17) ,
dans laquelle D² est défini comme indiqué dans la revendication 1, de manière usuelle et on transforme ensuite le composé de diazonium obtenu avec un mélange d'acide 4-amino-5-hydroxynaphtalène-2,7-disulfonique ou d'acide 4-amino-5-hydroxynaphtalène-1,7-disulfonique et d'un acide 6-amino-4-hydroxynaphtalène-2-sulfonique ou 3-amino-5-hydroxynaphtalène-2,7-disulfonique le cas échéant N-substitué en colorants monoazo des formules (15) et (II), et on diazote ensuite une amine de formule générale (18)
D¹-NH₂ (18),
où D¹ est défini comme indiqué dans la revendication 1, de manière usuelle et on couple ensuite le composé de diazonium obtenu dans une deuxième étape avec le mélange obtenu dans la première étape des colorants monoazo des formules générales (15) et (II) en un mélange des colorants des formules générales (I) et (II).

14. Procédé pour la préparation de mélanges de colorants selon l'une ou plusieurs des revendications 1 à 10, lorsque les composants diazo avec les groupes D¹ et D³ selon les formules générales (I) et (II) présentent la même signification, **caractérisé en ce qu'**on diazote une amine de formule générale (18), dans laquelle D¹ est défini comme indiqué dans la revendication 1, de manière usuelle et on transforme ensuite le composé de diazonium obtenu avec un mélange, dans un rapport défini, d'un colorant monoazo rouge selon la formule générale (15) et d'un acide 6-amino-4-hydroxy-naphtalène-2-sulfonique ou 3-amino-5-hydroxynaphtalène-2,7-disulfonique le cas échéant N-substitué, dans une première étape, en un mélange de colorants monoazo selon les formules générales (15) et (II) et on réalise ensuite le deuxième couplage du colorant monoazo de formule générale (15), avec formation d'un mélange des deux colorants des formules générales (I) et (II).

15. Préparation liquide aqueuse, contenant un mélange de colorants selon l'une ou plusieurs des revendications 1 à 13 avec une teneur totale en colorants de 5-50% en poids.

16. Utilisation de mélanges de colorants réactifs selon l'une ou plusieurs des revendications 1 à 14 pour la teinture et l'impression de matériau fibreux contenant des groupes hydroxy et/ou carboxamide.
